# EUROPEAN PATENT APPLICATION

(11) **EP 4 668 081 A1**
(43) Date of publication of application: **24.12.2025**
(21) Application number: 25183692.0
(22) Date of filing: 18.06.2025
(51) Int. Cl.: G06F 3/048

(54) **METHOD, APPARATUS AND DEVICE FOR DISPLAYING ANIMATION EFFECT WHEN CABIN AIR CONDITIONING IS RUNNING, MEDIUM, AND PRODUCT**

(30) Priority: 19.06.2024 CN 202410791564
(71) Applicant: ECARX TECHNOLOGY PTE. LTD., Singapore 048580 (SG)
(72) Inventor: WU, Yujing, Wuhan, Hubei, 430056 (CN); OUYANG, Shiqian, Wuhan, Hubei, 430056 (CN); FENG, Yang, Wuhan, Hubei, 430056 (CN); HAN, KE, Wuhan, Hubei, 430056 (CN); ZHOU, Yujie, Wuhan, Hubei, 430056 (CN)
(74) Representative: Santarelli

(57) **Abstract**

Embodiments of the present application provide a method, apparatus and device for displaying an animation effect when a cabin air conditioning is running, a medium, and a product, which relate to the field of smart vehicles. The method includes: acquiring an air conditioning state adjustment request; and calling the preset three-dimensional graphics rendering interface according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result. The present application directly utilizes the preset three-dimensional graphics rendering interface to render the dynamic effect model of the air conditioning air outlet, without the need to load a professional 3D engine, thereby having a fast startup speed and a lower performance consumption. And the application of the dynamic effect model of the air outlet not only enriches the interaction method but also intuitively reflects the air conditioning air outlet effect.

## Description

### TECHNICAL FIELD

The present application relates to the technical field of smart vehicles and, in particular, to a method, apparatus and device for displaying an animation effect when a cabin air conditioning is running, a medium, and a product.

### BACKGROUND

As a key part of a car cabin and a high-frequency use component, with the gradual popularization of electronic air outlets and the application of touch screens such as CSD (Control System Designed), air conditioning has made a major breakthrough in an expression form and an interaction manner. In order to improve the customer experience, the expression form and interaction manner of a 3D (Three-Dimensional) animation effect has be put into practice.

The current 3D animation effect display relies on a professional 3D engine, which is used to build a three-dimensional model. Model location information may be obtained when receiving a user request, so as to render and display the model. However, it takes a long time to load a professional engine, performance consumption is large and a black screen jam at startup occurs, affecting the user experience.

### SUMMARY

Embodiments of the present application provide a method, apparatus and device for displaying an animation effect when a cabin air conditioning is running, a medium, and a product, to solve the problem in the prior art of a long loading time of a professional engine, large performance consumption, and a black screen jam at startup.

In a first aspect, an embodiment of the present application provides a method for displaying an animation effect when a cabin air conditioning is running, where the method is applied to a vehicle terminal, the vehicle terminal is equipped with a preset three-dimensional graphics rendering interface, the preset three-dimensional graphics rendering interface is used to render an animation presented by the vehicle terminal, and the method includes:
acquiring an air conditioning state adjustment request, where the air conditioning state adjustment request includes an air conditioning state adjustment parameter; and
calling the preset three-dimensional graphics rendering interface according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result.

In a possible design, the acquiring the air conditioning state adjustment request includes:
receiving an air conditioning state adjustment operation triggered by a user through the dynamic effect model of the air conditioning air outlet, and performing intention identification for the air conditioning state adjustment operation to obtain the air conditioning state adjustment request; or
receiving the air conditioning state adjustment request triggered by the user through a component.

In a possible design, the calling the preset three-dimensional graphics rendering interface according to the air conditioning state adjustment request includes:
sending, according to the air conditioning state adjustment request, an air conditioning state adjustment instruction to an air conditioning electronic control unit (ECU) through an air conditioning application, where the air conditioning state adjustment instruction is used to instruct the ECU to control an air conditioning adjustment state;
receiving an animation effect adjustment instruction sent by the air conditioning application; where the animation effect adjustment instruction includes the air conditioning state adjustment parameter; and
calling the preset three-dimensional graphics rendering interface according to the animation effect adjustment instruction;
the calling the preset three-dimensional graphics rendering interface according to the animation effect adjustment instruction includes:
   performing verification for the animation effect adjustment instruction according to the air conditioning state adjustment parameter; and
   in response to passing the verification, calling the preset three-dimensional graphics rendering interface.

In a possible design, before acquiring the air conditioning state adjustment request, the method further includes:
receiving local configuration information sent by the air conditioning application, where the local configuration information includes information of an air outlet;
performing parameter initialization for the dynamic effect model of the air conditioning air outlet according to the information of the air outlet; and
loading a shader script and a preset animation effect rendering parameter corresponding to a respective air conditioning state, and sending the loaded shader script and the preset animation effect rendering parameter corresponding to the respective air conditioning state to the preset three-dimensional graphics rendering interface;
where the dynamic effect model of the air conditioning air outlet includes: a three-dimensional frame model and a particle flow animation; and the information of the air outlet includes a position of the air outlet;
the performing the parameter initialization for the dynamic effect model of the air conditioning air outlet according to the information of the air outlet includes:
   calculating initial coordinates of multiple vertices of the three-dimensional frame model according to the position of the air outlet; where the three-dimensional frame model is a conical frame, and a central axis of the conical frame coincides with a central axis of the air outlet.

In a possible design, before calling the preset three-dimensional graphics rendering interface according to the air conditioning state adjustment request, the method further includes:
generating randomly distributed particles within a scope of the three-dimensional frame model according to the air conditioning state adjustment parameter, initial coordinates of the multiple vertices and a Berlin noise algorithm, and determining a generation time point and coordinates of a respective particle;
the calling the preset three-dimensional graphics rendering interface according to the air conditioning state adjustment request includes:
   sending, to the preset three-dimensional graphics rendering interface, coordinates of the multiple vertices of the three-dimensional frame model, the generation time point and the coordinates of the respective particle, and the air conditioning state adjustment parameter, so that the preset three-dimensional graphics rendering interface determines the target animation effect rendering parameter, and renders the dynamic effect model of the air conditioning air outlet based on the target animation effect rendering parameter and the generation time point;
   the generating the randomly distributed particles within the scope of the three-dimensional frame model according to the air conditioning state adjustment parameter, the initial coordinates of the multiple vertices and the Berlin noise algorithm, and determining the generation time point and the coordinates of the respective particle includes:
      determining a number of generated particles according to the air conditioning state adjustment parameter;
      determining a position and a size of the three-dimensional frame model according to the initial coordinates of the multiple vertices; and
      inputting the position and the size of the three-dimensional frame model and the number of particles into the Berlin noise algorithm, and periodically generating, using the Berlin noise algorithm, randomly distributed particles at an upper end of the three-dimensional frame model, and outputting the generation time point and the coordinates of the respective particle.

In a possible design, the air conditioning state adjustment parameter includes: an air conditioning state adjustment type and an adjustment parameter value;
the air conditioning state adjustment type includes: adjustment for an air volume;
the adjustment parameter value includes: an adjusted air volume gear; and the target animation effect rendering parameter includes: a particle motion speed and a height of a three-dimensional frame model; or
the air conditioning state adjustment type includes: adjustment for a wind direction; the adjustment parameter value includes: an adjusted wind direction angle; and the target animation effect rendering parameter includes: a radial offset; or
the air conditioning state adjustment type includes: switching to a sweeping mode; the adjustment parameter value includes: a sweeping step and frequency; and the target animation effect rendering parameter includes: a radial offset.

In a possible design, the method further includes:
receiving a front-rear-row transition request, where the front-rear-row transition request includes a transition type;
determining a rendering direction based on the transition type; and
calling the preset three-dimensional graphics rendering interface according to the rendering direction, where the rendering direction is used to instruct the preset three-dimensional graphics rendering interface to acquire corresponding key frame images and render a transition animation based on the key frame images, and instruct the apparatus for displaying to display the transition animation based on a rendering result.

In a possible design, before calling the preset three-dimensional graphics rendering interface according to the front-rear-row transition request, the method further includes:
sending a front-rear-row transition notification message to the air conditioning application according to the front-rear-row transition request, where the front-rear-row transition notification message is used to instruct the air conditioning application to hide a build-up layer including an interactive component;
the method further includes:
   in response to determine that a last key frame image of the transition animation is displayed; sending a front-rear-row transition end message to the air conditioning application, where the front-rear-row transition end message is used to instruct the air conditioning application to display the build-up layer including the interactive component.

In a possible design, before receiving the front-rear-row transition request, the method further includes:
loading the key frame images of the front-rear-row transition animation, and configuring image indexes for the key frame images; and
sending the key frame images and the corresponding image indexes to the preset three-dimensional graphics rendering interface, so that the preset three-dimensional graphics rendering interface acquires the corresponding key frame images according to the image indexes corresponding to the rendering direction.

In a second aspect, an embodiment of the present application provides a method for displaying an animation effect when a cabin air conditioning is running, where the method is applied to a preset three-dimensional graphics rendering interface, the preset three-dimensional graphics rendering interface is mounted on a vehicle terminal, the preset three-dimensional graphics rendering interface is used to render an animation presented by the vehicle terminal, and the method includes:
receiving an animation effect adjustment instruction, where the animation effect adjustment instruction includes the air conditioning state adjustment parameter;
determining a target animation effect rendering parameter according to the air conditioning state adjustment parameter;
rendering a dynamic effect model of an air conditioning air outlet based on the target animation effect rendering parameter to obtain a first rendering result; and
sending the first rendering result to an apparatus for displaying, so that the apparatus for displaying displays the dynamic effect model of the air conditioning air outlet based on the first rendering result.

In a possible design, before receiving the animation effect adjustment instruction, the method further includes:
acquiring a shader script and a preset animation effect rendering parameter corresponding to a respective air conditioning state;
the determining the target animation effect rendering parameter according to the air conditioning state adjustment parameter includes:
   determining an air conditioning state to be reached through adjustment according to the air conditioning state adjustment parameter; and
   determining, from the preset animation effect rendering parameter corresponding to the respective air conditioning state, a preset animation effect rendering parameter corresponding to the air conditioning state to be reached through adjustment as the target animation effect rendering parameter.

In a possible design, the dynamic effect model of the air conditioning air outlet includes: a three-dimensional frame model and a particle flow animation; information of the air outlet includes a position of the air outlet;
before rendering the dynamic effect model of the air conditioning air outlet based on the target animation effect rendering parameter, the method further includes:
periodically acquiring coordinates of multiple vertices of the three-dimensional frame model, where the coordinates of the multiple vertices of the three-dimensional frame model are generated based on a change of an air conditioning state and a position of the air outlet; and
periodically acquiring a generation time point and coordinates of a respective particle, where the generation time point and the coordinates of the respective particle are generated within a scope of the three-dimensional frame model by a Berlin noise algorithm according to the air conditioning state adjustment parameter and initial coordinates of the multiple vertices of the three-dimensional frame model;
the rendering the dynamic effect model of the air conditioning air outlet based on the target animation effect rendering parameter includes:
   rendering the dynamic effect model of the air conditioning air outlet based on the target animation effect rendering parameter, the generation time point and the coordinates of the respective particle, and the coordinates of the multiple vertices of the three-dimensional frame model.

In a possible design, the air conditioning state adjustment parameter includes: an air conditioning state adjustment type and an adjustment parameter value;
the air conditioning state adjustment type includes: adjustment for an air volume;
the adjustment parameter value includes: an adjusted air volume gear; and the target animation effect rendering parameter includes: a particle motion speed and a height of a three-dimensional frame model;
the rendering the dynamic effect model of the air conditioning air outlet based on the target animation effect rendering parameter, the generation time point and the coordinates of the respective particle, and the coordinates of the multiple vertices of the three-dimensional frame model includes:
   calculating, using the shader script, a color and coordinates of a point that the respective particle moves to, based on the particle motion speed, the generation time point and the coordinates of the respective particle; and rendering a moving particle based on a calculation result to obtain the particle flow animation; and
   rendering the three-dimensional frame model using the height of the three-dimensional frame model and the coordinates of multiple vertices of the three-dimensional frame model;
   or, the air conditioning state adjustment parameter includes: an air conditioning state adjustment type and an adjustment parameter value;
   the air conditioning state adjustment type includes: adjustment for a wind direction or switching to a sweeping mode, and the adjustment parameter value includes: an adjusted wind direction angle or a sweeping step and frequency; the target animation effect rendering parameter includes: a radial offset;
   the rendering the dynamic effect model of the air conditioning air outlet based on the target animation effect rendering parameter, the generation time point and the coordinates of the respective particle, and the coordinates of the multiple vertices of the three-dimensional frame model includes:
      calculating, using the shader script, a color and coordinates of a point that the respective particle moves to, based on the radial offset, the generation time point and the coordinates of the respective particle, and rendering a moving particle based on a calculation result to obtain the particle flow animation; and
      calculating, using the shader script, coordinates of multiple target vertices of the three-dimensional frame model based on the radial offset and the coordinates of the multiple vertices of the three-dimensional frame model, and rendering the three-dimensional frame model based on a calculation result.

In a possible design, the method further includes:
receiving a rendering direction;
acquiring corresponding key frame images based on the rendering direction;
rendering a transition animation based on the key frame images to obtain a second rendering result; and
sending the second rendering result to the apparatus for displaying, so that the apparatus for displaying displays the transition animation based on the second rendering result.

In a possible design, before receiving the rendering direction, the method further includes:
receiving the key frame images and corresponding image indexes;
the acquiring the corresponding key frame images based on the rendering direction includes:
   acquiring the corresponding key frame images according to image indexes corresponding to the rendering direction.

In a third aspect, an embodiment of the present application provides an apparatus for displaying an animation effect when a cabin air conditioning is running, where the apparatus is located in an air conditioning application, and the apparatus includes:
an acquiring module, configured to acquire an air conditioning state adjustment request, where the air conditioning state adjustment request includes an air conditioning state adjustment parameter; and
a calling module, configured to call a preset three-dimensional graphics rendering interface according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result.

In a fourth aspect, an embodiment of the present application provides an apparatus for displaying an animation effect when a cabin air conditioning is running, where the apparatus is located in a preset three-dimensional graphics rendering interface, and the apparatus includes:
a receiving module, configured to receive an animation effect adjustment instruction, where the animation effect adjustment instruction includes an air conditioning state adjustment parameter;
a determining module, configured to determine a target animation effect rendering parameter according to the air conditioning state adjustment parameter;
a rendering module, configured to render a dynamic effect model of an air conditioning air outlet based on the target animation effect rendering parameter to obtain a first rendering result;
a sending module, configured to send the first rendering result to an apparatus for displaying, so that the apparatus for displaying displays the dynamic effect model of the air conditioning air outlet based on the first rendering result.

In a fifth aspect, an embodiment of the present application provides a device including: a processor, an output apparatus and a memory connected in communication with the processor;
the memory stores computer execution instructions; the output apparatus is configured to output a rendering result under control of the processor;
the processor executes the computer execution instructions stored in the memory to execute the method described in any one of the above first aspect and the second aspect.

In a sixth aspect, an embodiment of the present application provides a computer-readable storage medium storing computer execution instructions, where the computer execution instructions, when executed by a processor, are configured to implement the method described in any one of the above first aspect and the second aspect.

In a seventh aspect, an embodiment of the present application provides a computer program product including a computer program, where the computer program, when executed by a processor, implements the method described in any one of the above first aspect and the second aspect.

In the method, apparatus and device for displaying an animation effect when a cabin air conditioning is running, the medium, and the product provided in the embodiments of the present application, the air conditioning state adjustment request is acquired, where the air conditioning state adjustment request includes the air conditioning state adjustment parameter; and the preset three-dimensional graphics rendering interface is called according to the air conditioning state adjustment request, where the air conditioning state adjustment request is used to instruct the preset three-dimensional graphics rendering interface to determine the target animation effect rendering parameter based on the air conditioning state adjustment parameter, and the target animation effect rendering parameter is used to instruct the preset three-dimensional graphics rendering interface to render the dynamic effect model of the air conditioning air outlet and instruct the apparatus for displaying to display the dynamic effect model of the air conditioning air outlet based on the rendering result. After acquiring the air conditioning state adjustment request, the preset three-dimensional graphics rendering interface may be called directly according to the air conditioning state adjustment request. Since the preset three-dimensional graphics rendering interface is an inherent interface, of the vehicle terminal, for rendering animation, it is not necessary to load a professional 3D engine, which improves the startup speed and reduces the performance occupancy rate. The target animation effect rendering parameter is determined based on the air conditioning state adjustment parameter, and the dynamic effect model of the air conditioning air outlet is rendered based on the target animation effect rendering parameter, which can accurately obtain rendering parameters corresponding to different air conditioning states, and further animation effects corresponding to different air conditioning states can be obtained by rendering the model based on the target animation effect rendering parameter, which enriches the manifestations of the air conditioning air outlet effect. Finally, the rendering result is sent to the apparatus for displaying to display the animation effect of the air conditioning air outlet, so that the user can directly see the state change of the air conditioning.

### BRIEF DESCRIPTION OF DRAWINGS

The accompanying drawings herein are incorporated into the description and form a part of the description, showing embodiments conforming to the present application, and are used together with the description to explain the principles of the present application.
FIG. 1 is an application scenario diagram of a method for displaying an animation effect when a cabin air conditioning is running provided by the present application.
FIG. 2 is a flow chart of a method for displaying an animation effect when a cabin air conditioning is running provided by an embodiment of the present application.
FIG. 3 is a flow chart of a method for displaying an animation effect when a cabin air conditioning is running provided by another embodiment of the present application.
FIG. 4A and FIG. 4B form a signaling interaction flow chart of a method for displaying an animation effect when a cabin air conditioning is running provided by yet another embodiment of the present application.
FIG. 5A and FIG. 5B form a signaling interaction flow chart of a method for displaying an animation effect when a cabin air conditioning is running provided by yet another embodiment of the present application.
FIG. 6A and FIG. 6B form a signaling interaction flow chart of a method for displaying an animation effect when a cabin air conditioning is running provided by yet another embodiment of the present application.
FIG. 7 is a signaling interaction flow chart of a method for displaying an animation effect when a cabin air conditioning is running provided by yet another embodiment of the present application.
FIG. 8 is a schematic diagram of architecture of an air conditioning animation effect software package provided by the present application.
FIG. 9 is a schematic structural diagram of an apparatus for displaying an animation effect when a cabin air conditioning is running provided by the present application.
FIG. 10 is a schematic structural diagram of another apparatus for displaying an animation effect when a cabin air conditioning is running provided by the present application.
FIG. 11 is a schematic structural diagram of a device for displaying an animation effect when a cabin air conditioning is running provided by the present application.

Through the above accompanying drawings, embodiments specified in the present application have been shown, which will be described in more detail hereinafter. These accompanying drawings and text descriptions are not intended to limit the scope of the concept of the present application in any way, but to explain the concept of the present application for a person skilled in the art by referring to the specific embodiments.

### DESCRIPTION OF EMBODIMENTS

Exemplary embodiments will be described in detail herein, and examples thereof are shown in the accompanying drawings. When the following description refers to the drawings, unless otherwise indicated, same numbers in different drawings represent the same or similar elements. The implementations described in the following exemplary embodiments do not represent all implementations consistent with the present application. On the contrary, they are only examples of apparatuses and methods consistent with some aspects of the present application.

In order to clearly understand the technical scheme of the present application, first of all, the scheme of the prior art is introduced in detail.

At present, display of a three-dimensional animation effect on a vehicle terminal depends on a professional 3D engine, such as, an unreal engine. The unreal engine is used to build a three-dimensional scene model, and the scene model information is acquired when a central control system of a device for displaying is lit; and based on scene model information, three-dimensional scene rendering is performed to display the three-dimensional scene model on a human-computer interface of the device for displaying. The three-dimensional scene model includes: a three-dimensional model of a vehicle and a three-dimensional animation icon of an interactive instruction, a time axis, a floating-point track and a key frame being added to the three-dimensional model, and the three-dimensional icon being presented an irregular floating dynamic display according to the time axis and key frame within a range of the floating-point track. A user may control a switch of the vehicle air conditioning and set a temperature of the air conditioning by touching a control icon of the vehicle air conditioning. When receiving a touch operation of the user on the three-dimensional model of the vehicle, the unreal engine is used to render the three-dimensional model, so that a rendered picture is displayed on the human-computer interface. However, as for using the professional 3D engine, the performance consumption is large and a loading time increases, which will slow down a startup speed, and even cause a black screen jam, affecting the user experience.

Therefore, in the face of the technical problem in the prior art, in order to save loading time and speed up the display of the animation effect, a preset three-dimensional graphics rendering interface carried by the vehicle terminal may be used to render the model rather than relying on the professional 3D engine, so that the preset three-dimensional graphics rendering interface may be called directly after acquiring an air conditioning state adjustment request without loading the professional engine, which improves the startup speed and reduces the performance occupancy rate at the same time. In order to enrich expression forms of the animation effect, corresponding animation effect rendering parameters under different air conditioning states may be configured in the preset three-dimensional graphics rendering interface. When receiving the air conditioning state adjustment request, a target animation effect rendering parameter may be determined according to an air conditioning state adjustment parameter in the air conditioning state adjustment request, and a dynamic effect model of an air conditioning air outlet may be rendered based on the target animation effect rendering parameter, thus a desired animation effect and rendering parameters corresponding to different air conditioning states may be accurately obtained; and finally, a rendering result is sent to an apparatus for displaying to display the animation effect of the air conditioning air outlet, so that the user can directly see the state change of the air conditioning.

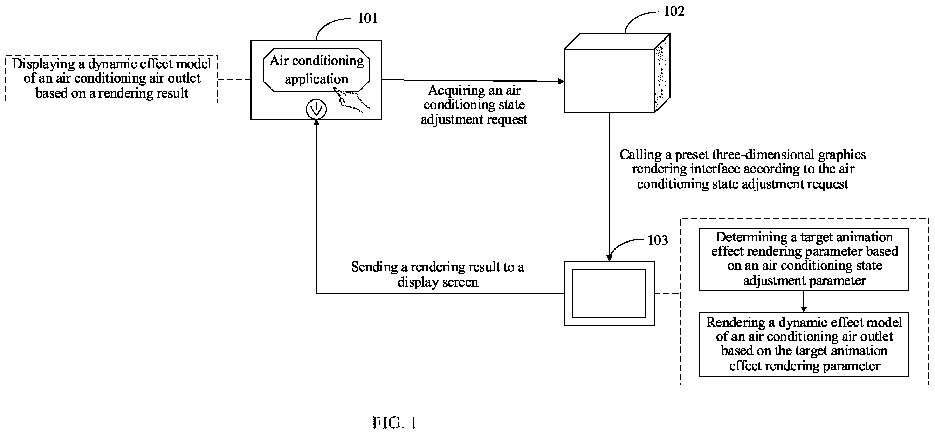

FIG. 1 is an application scenario diagram of a method for displaying an animation effect when a cabin air conditioning is running provided by the present application. As shown in FIG. 1, a system for displaying an animation effect when a cabin air conditioning is running corresponding to a method for displaying an animation effect when a cabin air conditioning is running provided by the present application includes: a display screen 101, an apparatus for displaying an animation effect when a cabin air conditioning is running 102, and a preset three-dimensional graphics rendering interface 103. Among them, the apparatus for displaying an animation effect when a cabin air conditioning is running 102 may be integrated into an air conditioning application in a form of a software development package. It can be understood that the system for displaying an animation effect when a cabin air conditioning is running corresponding to the method for displaying an animation effect when a cabin air conditioning is running is integrated in the vehicle terminal.

Specifically, a user triggers an air conditioning state adjustment request by clicking an air conditioning application icon on the display screen 101, and the apparatus for displaying an animation effect when a cabin air conditioning is running 102 acquires the air conditioning state adjustment request, and calls the preset three-dimensional graphics rendering interface 103 according to the air conditioning state adjustment request, the preset three-dimensional graphics rendering interface 103 determines a target animation effect rendering parameter based on the air conditioning state adjustment parameter, and renders a dynamic effect model of an air conditioning air outlet based on the target animation effect rendering parameter, after the rendering is completed and a rendering result is obtained, the preset three-dimensional graphics rendering interface 103 sends the rendering result to the display screen 101, so that the display screen 101 may display the dynamic effect model of the air conditioning air outlet.

The technical solution of the present application and how the technical solution of the present application solves the above technical problems are described in detail below with specific embodiments. The following specific embodiments may be combined with each other, and the same or similar concepts or processes may not be repeated in some embodiments. The embodiments of the present application will be described below in conjunction with the accompanying drawings.

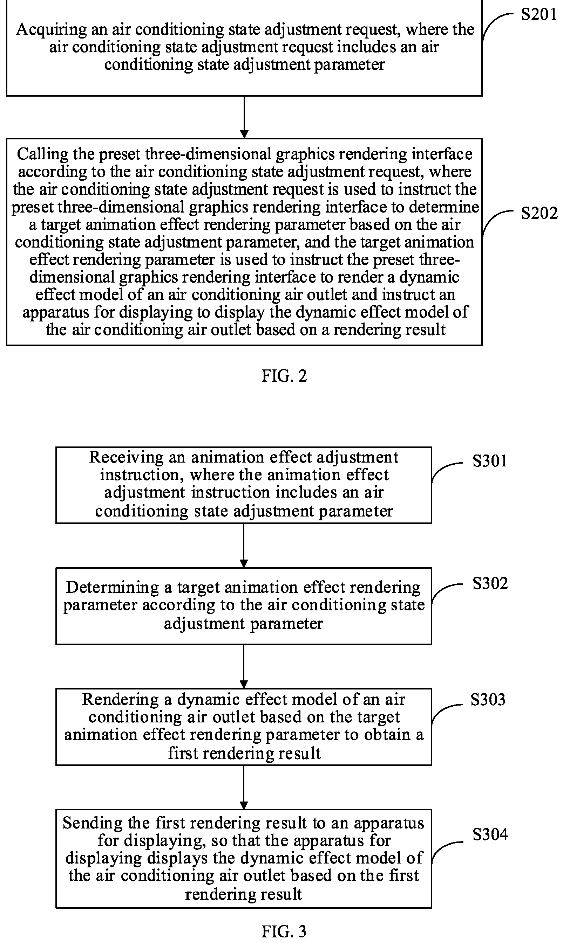

FIG. 2 is a flow chart of a method for displaying an animation effect when a cabin air conditioning is running provided by an embodiment of the present application. As shown in FIG. 2, an executive subject of the embodiment is an apparatus for displaying an animation effect when a cabin air conditioning is running. The apparatus for displaying an animation effect when a cabin air conditioning is running may be realized through a computer program, for example, it may be configured in an air conditioning application as an independent process, or it may be realized through a medium that stores a relevant computer program, such as, a USB flash disk and/or an optical disk, and it may also be integrated in a device for displaying an animation effect when a cabin air conditioning is running. The method for displaying an animation effect when a cabin air conditioning is running provided by this embodiment includes the following steps.

S201, acquiring an air conditioning state adjustment request, where the air conditioning state adjustment request includes an air conditioning state adjustment parameter.

Among them, the air conditioning state adjustment parameter is a parameter used to adjust an air conditioning state. The air conditioning state adjustment parameter may include adjustment types of adjustment for an air volume, adjustment for an air outlet mode and adjustment for a wind direction, etc., and there may also be other adjustment types, which are not limited in this embodiment. Correspondingly, when the adjustment type is adjustment for the air volume, the adjustment parameter may be to adjust an air volume gear to a preset gear; when the adjustment type is adjustment for the air outlet mode, the adjustment parameter may be to adjust the air outlet mode to a sweeping mode; when the adjustment type is adjustment for the wind direction, the adjustment parameter may be to offset a wind direction angle to the left or right by a preset angle.

The preset gear may be a gear within a preset range, such as, gear 1, gear 3, gear 5, etc., which is not limited in this embodiment.

The preset angle may be 30°, 45°, etc., which is not limited in this embodiment.

Specifically, a user may click an air conditioning application icon on a display screen of the vehicle terminal, enter an air conditioning application interface, and trigger an air conditioning state adjustment operation. The air conditioning state adjustment operation sent by the air conditioning application is received and analyzed, so as to acquire the air conditioning state adjustment request.

It can be understood that after clicking the air conditioning application icon on the display screen of the vehicle terminal, a background image of a front row of a cabin including multiple air outlet icons and multiple control components will be displayed on the display screen, in which an air outlet icon is covered with a corresponding dynamic effect model of an air conditioning air outlet.

Among them, the air conditioning state adjustment operation includes: adjusting an air conditioning state by clicking the control component, such as, clicking a control component of air volume gear 3, or clicking a control component of a sweeping mode, etc.; controlling the dynamic effect model of the air conditioning air outlet to change a wind direction by clicking/dragging the air outlet icon, etc.

It can be understood that if the air conditioning is turned on, an image displayed on the display screen also includes a distribution area of particles simulating an air outlet effect. A user may click/drag the particle distribution area to control the dynamic effect model of the air conditioning air outlet and adjust the air conditioning state.

Among them, if the received air conditioning state adjustment operation is to adjust the air conditioning state by clicking on the control component, it is necessary to analyze a hot zone interaction result, and determine an air conditioning state adjustment request of the user by judging whether the clicked position is within a hot zone of the control component, where the air conditioning state adjustment request includes a specific air conditioning state adjustment parameter, such as, changing an air volume gear to 3. If the received air conditioning state adjustment operation is to click/drag the dynamic effect model of the air conditioning air outlet, a collision detection algorithm is first used to determine the clicked position of the user, a coordinate picking algorithm is used to establish a three-dimensional coordinates based on the position, a model closest to the position in a z-axis direction is determined as a model the user wants to control, and current vertex coordinates of the model are captured, and the current vertex coordinates of the model may be made a difference from initial coordinates of each vertex of the model, so as to obtain the air conditioning state adjustment request, which includes a specific air conditioning state adjustment parameter, such as, adjusting a wind direction to the left 45 °.

It can be understood that the initial coordinates of each vertex of the dynamic effect model of the air conditioning air outlet are generated according to the position of each air outlet in a configuration file sent by the air conditioning application at the time of initialization.

S202, calling the preset three-dimensional graphics rendering interface according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result.

Among them, the animation effect rendering parameter is a parameter required for rendering the animation effect. It may vary depending on the air conditioning state adjustment request. Exemplarily, if the air conditioning state adjustment request is an adjustment request for a wind direction, the animation effect rendering parameter is a radial offset, and if the air conditioning state adjustment request is an adjustment request for an air volume, the animation effect rendering parameter is a particle motion speed, a height of the model, and so on.

The target animation effect rendering parameter is a corresponding animation effect rendering parameter determined according to the specific air conditioning state adjustment parameter.

It should be understood that the animation effect rendering parameter corresponding to each air conditioning state adjustment parameter may be configured in advance and sent to the preset three-dimensional graphics rendering interface at the time of initialization.

Specifically, after analyzing the air conditioning state adjustment operation to obtain the air conditioning state adjustment request, the air conditioning state adjustment parameter in the air conditioning state adjustment request is sent to the preset three-dimensional graphics rendering interface to call the preset three-dimensional graphics rendering interface to start rendering. According to the received air conditioning state adjustment parameter, The preset three-dimensional graphics rendering interface determines the target animation effect rendering parameter from the animation effect rendering parameters corresponding to respective air conditioning state adjustment parameter, and calculates the vertex coordinates of the framework of the dynamic effect model of the air conditioning air outlet and coordinates and colors of the particles simulating the air conditioning air outlet effect based on the target animation effect rendering parameter, the preset three-dimensional graphics rendering interface renders the dynamic effect model of the air conditioning air outlet according to a calculation result, and sends the rendering result to the apparatus for displaying, so that the apparatus for displaying may display the dynamic effect model of the air conditioning air outlet based on the rendering result.

Among them, the particles simulating the air outlet effect are generated within a scope of the model according to the air conditioning state adjustment parameter using the Berlin noise algorithm.

Optionally, the air conditioning state adjustment request may further be used to instruct the air conditioning control unit to adjust the air conditioning state. The air conditioning state adjustment request is sent to the air conditioning application, and the air conditioning application sends an air conditioning state adjustment instruction to an air conditioning electronic control unit (ECU) according to the received air conditioning application adjustment request, so that the ECU may adjust the air conditioning state according to the air conditioning state adjustment parameter.

Optionally, after obtaining the air conditioning state adjustment request, the included air conditioning state parameter may further be verified to ensure the rationality of the air conditioning state request.

In the method for displaying an animation effect when a cabin air conditioning is running provided by the embodiment of the present application, an air conditioning state adjustment request is acquired, where the air conditioning state adjustment request includes an air conditioning state adjustment parameter; and the preset three-dimensional graphics rendering interface is called according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result. After acquiring the air conditioning state adjustment request, the preset three-dimensional graphics rendering interface may be called directly according to the air conditioning state adjustment request. Since the preset three-dimensional graphics rendering interface is an inherent interface, of the vehicle terminal, for rendering animation, it is not necessary to load a professional 3D engine, which improves the startup speed and reduces the performance occupancy rate. The target animation effect rendering parameter is determined based on the air conditioning state adjustment parameter, and the dynamic effect model of the air conditioning air outlet is rendered based on the target animation effect rendering parameter, which can accurately obtain animation effect rendering parameters corresponding to different air conditioning states, and further animation effects corresponding to different air conditioning states can be obtained by rendering the model based on the target animation effect rendering parameter, which enriches the manifestations of the air conditioning air outlet effect. Finally, the rendering result is sent to the apparatus for displaying to display the animation effect of the air conditioning air outlet, so that the user can directly see the state change of the air conditioning.

As an optional implementation, on the basis of the above embodiment, the acquiring the air conditioning state adjustment request includes:
receiving an air conditioning state adjustment operation triggered by a user through the dynamic effect model of the air conditioning air outlet, and performing intention identification for the air conditioning state adjustment operation to obtain the air conditioning state adjustment request; or
receiving the air conditioning state adjustment request triggered by the user through a component.

Specifically, the user may click/drag the dynamic effect model of the air conditioning air outlet on the display screen to trigger the air conditioning state adjustment operation to control the air conditioning to adjust the wind direction, etc., after receiving the air conditioning state adjustment operation, a collision detection algorithm is first used to determine the clicked position of the user, then a coordinate picking algorithm is used to determine a position of the model that the user wants to control and grab current vertex coordinates of the model, and an intention of the user is identified through the vertex coordinates, so as to obtain the air conditioning state adjustment request.

Among them, the clicking/dragging the dynamic effect model of the air conditioning air outlet may be clicking/dragging the air outlet position of the model or the distribution area of the particles simulating the air outlet effect, which is not limited in this embodiment.

Among them, a shape of an air outlet of the dynamic effect model of the air conditioning air outlet may be customized as, such as, a circular, a square or other shapes, which are not limited in this embodiment.

Exemplarily, the user drags the dynamic effect model of the air conditioning air outlet to adjust the wind direction. When the user touches the model for the first time, the collision detection algorithm and the coordinate picking algorithm are used to acquire the current vertex coordinates of the model that the user wants to control. After dragging, latest current vertex coordinates of the model are acquired, and a wind direction angle that the user wants to adjust is calculated according to the two groups of coordinates to obtain the air conditioning state adjustment request.

Exemplarily, the user clicks on the dynamic effect model of the air conditioning air outlet to control turning on the air conditioning. After the current vertex coordinates of the model that the user wants to control is acquired by using the collision detection algorithm and coordinate picking algorithm, differences between the current vertex coordinates and the initial coordinates of each vertex of the model may be calculated. If the difference is 0, and the current air volume gear is 0, the air volume gear and the wind direction before closing will be used as the air conditioning state adjustment request to control turning on the air conditioning. It can be understood that when the air conditioning is turned off, the current air volume gear and the wind direction will be saved.

Or, the user may also click on the component to trigger the air conditioning state adjustment operation. After receiving the air conditioning state adjustment operation, it is necessary to analyze a hot zone interaction result, and obtain the air conditioning state adjustment request by judging which component hot zone range the clicked position is within. It can be understood that each component has a corresponding hot zone range. If the clicked position is within a hot zone range of a certain component, it will be determined as the component that the user wants to control.

Exemplarily, the user adjusts the air volume by clicking on the component, it is determined that the clicked position is within a hot zone of a component with an air volume gear 3, the air volume gear 3 is been compared with a current air volume gear to determine whether they are consistent. If they are consistent, the processing is terminated; if not, the air volume gear 3 is determined as the air conditioning state adjustment request.

In the method for displaying an animation effect when a cabin air conditioning is running provided by the embodiment of the present application, the acquiring the air conditioning state adjustment request includes: receiving an air conditioning state adjustment operation triggered by a user through the dynamic effect model of the air conditioning air outlet, and performing intention identification for the air conditioning state adjustment operation to obtain the air conditioning state adjustment request; or receiving the air conditioning state adjustment request triggered by the user through a component. The user may not only control the air conditioning state through the component, but also adjust the air conditioning state through the model, which provide the user with more interesting human-computer interaction and improve the user experience; in addition, intention identification is performed for different air conditioning state adjustment operations, which can accurately obtain the needs of the user.

As an optional implementation, on the basis of the above embodiment, the calling the preset three-dimensional graphics rendering interface according to the air conditioning state adjustment request includes:
sending, according to the air conditioning state adjustment request, an air conditioning state adjustment instruction to an air conditioning electronic control unit (ECU) through an air conditioning application, where the air conditioning state adjustment instruction is used to instruct the ECU to control an air conditioning adjustment state;
receiving an animation effect adjustment instruction sent by the air conditioning application; where the animation effect adjustment instruction includes the air conditioning state adjustment parameter; and
calling the preset three-dimensional graphics rendering interface according to the animation effect adjustment instruction;
the calling the preset three-dimensional graphics rendering interface according to the animation effect adjustment instruction includes:
   performing verification for the animation effect adjustment instruction according to the air conditioning state adjustment parameter; and
   in response to passing the verification, calling the preset three-dimensional graphics rendering interface.

Specifically, after obtaining the air conditioning state adjustment request, the request is sent to the air conditioning application, which sends the air conditioning state adjustment instruction to the ECU based on the air conditioning state adjustment request, where the instruction includes the air conditioning state adjustment parameter, and the ECU controls the air conditioning state according to the instruction. After the adjustment of the air conditioning state is completed, the ECU will notify the air conditioning application that the adjustment of the air conditioning state has been completed, and the air conditioning application sends the animation effect adjustment instruction to an apparatus for displaying an animation effect when a cabin air conditioning is running; after receiving the instruction, the apparatus for displaying an animation effect when a cabin air conditioning is running sends the air conditioning state adjustment parameter included in the instruction to the preset three-dimensional graphics rendering interface to call the preset three-dimensional graphics rendering interface to start rendering.

Specifically, after receiving the animation effect adjustment instruction, it is necessary to perform logical verification to determine whether parameter information in the animation effect adjustment instruction is within a preset range. If it is within the preset range, the verification passes, then a local air conditioning state parameter is updated according to the air conditioning state adjustment parameter, and the air conditioning state adjustment parameter is sent to the preset three-dimensional graphics rendering interface to call the preset three-dimensional graphics rendering interface to start rendering.

Among them, the preset range is a value range of the air conditioning state that the cabin air conditioning may achieve, such as, the air volume range 1-5, the wind direction up 90° or other value ranges, which are not limited in this embodiment.

In the method for displaying an animation effect when a cabin air conditioning is running provided by the embodiment of the present application, the calling the preset three-dimensional graphics rendering interface according to the air conditioning state adjustment request includes: sending, according to the air conditioning state adjustment request, an air conditioning state adjustment instruction to an air conditioning electronic control unit (ECU) through an air conditioning application, where the air conditioning state adjustment instruction is used to instruct the ECU to control an air conditioning adjustment state; receiving an animation effect adjustment instruction sent by the air conditioning application; where the animation effect adjustment instruction includes the air conditioning state adjustment parameter; and calling the preset three-dimensional graphics rendering interface according to the animation effect adjustment instruction; the calling the preset three-dimensional graphics rendering interface according to the animation effect adjustment instruction includes: performing verification for the animation effect adjustment instruction according to the air conditioning state adjustment parameter; and in response to passing the verification, calling the preset three-dimensional graphics rendering interface. Controlling the ECU to adjust the air conditioning state according to the air conditioning state adjustment request can meet the needs of the user in time, and then calling the preset three-dimensional graphics rendering interface for rendering after the ECU has completed the adjustment of the air conditioning state can ensure the consistency between a state of a physical air outlet and the animation effect. Before calling the preset three-dimensional graphics rendering interface, the animation effect adjustment instruction is logically verified, which ensures the rationality and accuracy of the instruction, avoids system crash due to the misoperation of the user, and helps to improve the stability of instruction execution.

As an optional implementation, on the basis of the above embodiments, before acquiring the air conditioning state adjustment request, the method further includes:
receiving local configuration information sent by the air conditioning application, where the local configuration information includes information of an air outlet;
performing parameter initialization for the dynamic effect model of the air conditioning air outlet according to the information of the air outlet; and
loading a shader script and a preset animation effect rendering parameter corresponding to a respective air conditioning state, and sending the loaded shader script and the preset animation effect rendering parameter corresponding to the respective air conditioning state to the preset three-dimensional graphics rendering interface;
where the dynamic effect model of the air conditioning air outlet includes: a three-dimensional frame model and a particle flow animation; and the information of the air outlet includes a position of the air outlet;
the performing the parameter initialization for the dynamic effect model of the air conditioning air outlet according to the information of the air outlet includes:
   calculating initial coordinates of multiple vertices of the three-dimensional frame model according to the position of the air outlet; where the three-dimensional frame model is a conical frame, and a central axis of the conical frame coincides with a central axis of the air outlet.

Among them, the local configuration information is information included in a pre-configured file in the air conditioning application. The local configuration information may include information for establishing a connection, a background image of the cabin, information of an air outlet, etc.

Among them, the information of the air outlet is information of the actual air outlet in the cabin, such as, the number of air outlets, a position of an air outlet, etc.

Among them, the shader script is a script used to calculate a parameter required for rendering. The preset three-dimensional graphics rendering interface may create a shader program based on the received shader script, so that when rendering is required, the shader program may be called through the preset three-dimensional graphics rendering interface for calculation.

It can be understood that the shader script include an algorithm, a rule, etc. for calculation.

Among them, the preset animation effect rendering parameter corresponding to each air conditioning state is pre-configured, and the parameter used to render the corresponding animation effect under various air conditioning states may include particle motion speeds corresponding to different air volume gears, diameter offsets corresponding to different wind direction angles, etc., which are not limited in this embodiment.

Specifically, after the vehicle is powered on, the air conditioning application starts to initialize, loads the local configuration file, sends the local configuration information to the apparatus for displaying an animation effect when a cabin air conditioning is running, initializes a parameter of the dynamic effect model of the air conditioning air outlet according to the information of the air outlet in the received local configuration information, starts loading the pre-configured shader script and a preset animation effect rendering parameter corresponding to the respective air conditioning state, and sends the loaded shader script and the preset animation effect rendering parameter corresponding to the respective air conditioning state to the preset three-dimensional graphics rendering interface.

It can be understood that during the initialization process, it is also necessary to create a communication connection with the air conditioning electronic control unit (ECU), and establish a connection with the preset three-dimensional graphics rendering interface through the configuration information. Specifically, after receiving the information of the air outlet, three-dimensional coordinates are established according to position information of the air outlet to generate the initial coordinates of multiple vertices of the corresponding three-dimensional frame model.

The vertex is a point in a three-dimensional space. It can be understood that each vertex corresponds to a set of spatial coordinates, and all vertices in the three-dimensional frame model are used to describe a position of the model in transparency space.

Optionally, a transparency of the three-dimensional frame model may be configured as required. If the transparency is set to the highest, the user can see only the air outlet and the particle flow animation.

It can be understood that the position of the air outlet is determined by adjusting a layout parameter according to a position of the air conditioning air outlet in the actual cabin.

Among them, a height of the three-dimensional frame model may also be dynamically adjusted according to the air volume. It may be pre-configured in the preset animation effect rendering parameter corresponding to the respective air conditioning state. When the air volume is high, the height of the three-dimensional frame model will also increase, and a simulated air outlet distance will be extended.

In the method for displaying an animation effect when a cabin air conditioning is running provided by the embodiment of the present application, before acquiring the air conditioning state adjustment request, the method further includes: receiving local configuration information sent by the air conditioning application, where the local configuration information includes information of an air outlet; performing parameter initialization for the dynamic effect model of the air conditioning air outlet according to the information of the air outlet; and loading a shader script and a preset animation effect rendering parameter corresponding to a respective air conditioning state, and sending the loaded shader script and the preset animation effect rendering parameter corresponding to the respective air conditioning state to the preset three-dimensional graphics rendering interface; where the dynamic effect model of the air conditioning air outlet includes: a three-dimensional frame model and a particle flow animation; and the information of the air outlet includes a position of the air outlet; the performing the parameter initialization for the dynamic effect model of the air conditioning air outlet according to the information of the air outlet includes: calculating initial coordinates of multiple vertices of the three-dimensional frame model according to the position of the air outlet; where the three-dimensional frame model is a conical frame, and a central axis of the conical frame coincides with a central axis of the air outlet. During the initialization, parameter initialization for the dynamic effect model of the air conditioning air outlet is performed according to the information of the air outlet, and the loaded shader script and the preset animation effect rendering parameter corresponding to the respective air conditioning state are sent to the preset three-dimensional graphics rendering interface, which not only saves a time of animation effect rendering display, but also can quickly and accurately complete the rendering according to the previously received shader script and the preset animation effect rendering parameter corresponding to the respective air conditioning state when calling the preset three-dimensional graphics rendering interface for rendering, thereby improving the speed and accuracy of animation effect rendering display. The initial coordinates of the multiple vertices of the three-dimensional frame model are calculated according to the position of the air outlet, which can ensure that the model is highly consistent with the real environment, and the obtaining of the initial coordinates of the multiple vertices of the three-dimensional frame model can improve the efficiency and accuracy of subsequent rendering.

As an optional implementation, on the basis of the above embodiment, before calling the preset three-dimensional graphics rendering interface according to the air conditioning state adjustment request, the method further includes:
generating randomly distributed particles within a scope of the three-dimensional frame model according to the air conditioning state adjustment parameter, initial coordinates of the multiple vertices and a Berlin noise algorithm, and determining a generation time point and coordinates of a respective particle;
the calling the preset three-dimensional graphics rendering interface according to the air conditioning state adjustment request includes:
   sending, to the preset three-dimensional graphics rendering interface, coordinates of the multiple vertices of the three-dimensional frame model, the generation time point and the coordinates of the respective particle, and the air conditioning state adjustment parameter, so that the preset three-dimensional graphics rendering interface determines the target animation effect rendering parameter, and renders the dynamic effect model of the air conditioning air outlet based on the target animation effect rendering parameter and the generation time point;
   the generating the randomly distributed particles within the scope of the three-dimensional frame model according to the air conditioning state adjustment parameter, the initial coordinates of the multiple vertices and the Berlin noise algorithm, and determining the generation time point and the coordinates of the respective particle includes:
      determining a number of generated particles according to the air conditioning state adjustment parameter;
      determining a position and a size of the three-dimensional frame model according to the initial coordinates of the multiple vertices;
      inputting the position and the size of the three-dimensional frame model and the number of particles into the Berlin noise algorithm, and periodically generating, using the Berlin noise algorithm, randomly distributed particles at an upper end of the three-dimensional frame model, and outputting the generation time point and the coordinates of the respective particle.

Specifically, before rendering, the apparatus for displaying an animation effect when a cabin air conditioning is running retrieves the initial coordinates of the multiple vertices of the three-dimensional frame model obtained during initialization, uses the pre-configured Berlin noise algorithm, determines the number of generated particles according to the air conditioning state adjustment parameter, and determines the position and a scope boundary of the three-dimensional frame model according to the initial coordinates of the multiple vertices. Based on the number of the particles and the position and the scope of the model, randomly distributed particles are generated periodically within the scope of the three-dimensional frame model, and the generated particle will carry corresponding coordinates and a generation time point.

Among them, the air volume in the air conditioning state adjustment parameter affects the number of particles generated. If the air volume gear is high, more particles will be generated.

Specifically, after generating the randomly distributed particles, it is necessary to send the coordinates of the multiple vertices of the three-dimensional frame model, the generation time point and the coordinates of the respective particle, and the air conditioning state adjustment parameter to the preset three-dimensional graphics rendering interface to call the preset three-dimensional graphics rendering interface. The preset three-dimensional graphics rendering interface may determine the target animation effect rendering parameter from the preset animation effect rendering parameter corresponding to the respective air conditioning state according to the received air conditioning state adjustment parameter, and perform calculation based on the target animation effect rendering parameter and a generation time point of a particle, so as to render the three-dimensional frame model and the respective particle.

Specifically, if the air conditioning state adjustment parameter includes the air volume gear to be adjusted, according to the air volume gear to be adjusted, the number of generated particles is determined from preset numbers of particles corresponding to a respective air volume gear, and average coordinates of all vertices are calculated according to the initial coordinates of the multiple vertices of the three-dimensional frame model to determine the position of the air outlet of the three-dimensional frame model, and the size of the three-dimensional frame model is determined by calculating the maximum and minimum values corresponding to the X axis, Y axis and Z axis, so that the particles may be generated and moved within the scope of the three-dimensional frame model. The position and the size of the three-dimensional frame model and the number of generated particles are input into the Berlin noise algorithm, the Berlin noise algorithm first defines a lattice structure, where each lattice vertex has a gradient vector associated with it, and calculates a noise value of each lattice, where the generated noise value may be mapped to an upper end of the three-dimensional frame model, that is, randomly distributed particles are generated at the air outlet. It can be understood that the Berlin noise algorithm may periodically generate particles and output a generation time point and coordinates corresponding to each particle.

Among them, the preset number of particles corresponding to a respective air volume gear may be pre-configured in the Berlin noise algorithm.

In the method for displaying an animation effect when a cabin air conditioning is running provided by the embodiment of the present application, before calling the preset three-dimensional graphics rendering interface according to the air conditioning state adjustment request, the method further includes: generating randomly distributed particles within a scope of the three-dimensional frame model according to the air conditioning state adjustment parameter, initial coordinates of the multiple vertices and a Berlin noise algorithm, and determining a generation time point and coordinates of a respective particle; the calling the preset three-dimensional graphics rendering interface according to the air conditioning state adjustment request includes: sending, to the preset three-dimensional graphics rendering interface, coordinates of the multiple vertices of the three-dimensional frame model, the generation time point and the coordinates of the respective particle, and the air conditioning state adjustment parameter, so that the preset three-dimensional graphics rendering interface determines the target animation effect rendering parameter, and renders the dynamic effect model of the air conditioning air outlet based on the target animation effect rendering parameter and the generation time point; the generating the randomly distributed particles within the scope of the three-dimensional frame model according to the air conditioning state adjustment parameter, the initial coordinates of the multiple vertices and the Berlin noise algorithm, and determining the generation time point and the coordinates of the respective particle includes: determining a number of generated particles according to the air conditioning state adjustment parameter; determining a position and a size of the three-dimensional frame model according to the initial coordinates of the multiple vertices; and inputting the position and the size of the three-dimensional frame model and the number of particles into the Berlin noise algorithm, and periodically generating, using the Berlin noise algorithm, randomly distributed particles at an upper end of the three-dimensional frame model, and outputting the generation time point and the coordinates of the respective particle. The randomly distributed particles are generated through the Berlin noise algorithm, which can simulate a blowing effect closer to the real; the particles are generated according to the air conditioning state adjustment parameter, which ensures that a distribution and dynamic behaviors of the particles directly reflect the current air conditioning operation state; a generation time point and coordinates of each particle are determined, which ensures that motions and changes of the particles in the three-dimensional frame model can be accurately tracked and analyzed and lays the foundation for subsequent rendering work; and a series of parameters are sent to the preset three-dimensional graphics rendering interface, which ensures the accuracy of the rendering result. The number of the generated particles is determined according to the air conditioning state adjustment parameter, which can vividly and intuitively reflect the change of the air conditioning state; and the particles are generated based on the position and the size of the three-dimensional frame model, which ensures the accuracy of the generation scope of particles; and the particles are generated periodically, which can simulate a continuous and constantly changing particle flow, solving the problem of lack of change in the relative viewpoint of particles and improving the user experience.

As an optional implementation, on the basis of the above embodiments, the air conditioning state adjustment parameter includes: an air conditioning state adjustment type and an adjustment parameter value;
the air conditioning state adjustment type includes: adjustment for an air volume; the adjustment parameter value includes: an adjusted air volume gear;
the target animation effect rendering parameter includes: a particle motion speed and a height of a three-dimensional frame model; or
the air conditioning state adjustment type includes: adjustment for a wind direction; the adjustment parameter value includes: an adjusted wind direction angle; and the target animation effect rendering parameter includes: a radial offset; or
the air conditioning state adjustment type includes: switching to a sweeping mode; the adjustment parameter value includes: a sweeping step and frequency; and the target animation effect rendering parameter includes: a radial offset.

Specifically, the air conditioning state adjustment parameter may include the air conditioning state adjustment type and the adjustment parameter value. The air conditioning state adjustment type may include the adjustment for the air volume, the adjustment for the wind direction and switching to the sweeping mode. The corresponding adjustment parameter value may include the adjusted air volume gear, the adjusted wind direction angle, and the sweeping step and frequency. The respective air conditioning state has the corresponding target animation effect rendering parameter, including the particle motion speed, the height of the three-dimensional frame model, and the radial offset.

It can be understood that different air volume gears correspond to different particle motion speeds and heights of three-dimensional frame models. For example, the particle motion speed corresponding to an air volume gear 2 is 10m/s, and the height of the three-dimensional frame model is 3cm. Different wind direction angles and sweeping steps and frequencies also correspond to different radial offsets. For example, the radial offset corresponding to 45° to the left of the wind direction is 2cm to the left.

In the method for displaying an animation effect when a cabin air conditioning is running provided by the embodiment of the present application, the air conditioning state adjustment parameter includes: an air conditioning state adjustment type and an adjustment parameter value; the air conditioning state adjustment type includes: adjustment for an air volume; the adjustment parameter value includes: an adjusted air volume gear; the target animation effect rendering parameter includes: a particle motion speed and a height of a three-dimensional frame model; or the air conditioning state adjustment type includes: adjustment for a wind direction; the adjustment parameter value includes: an adjusted wind direction angle; and the target animation effect rendering parameter includes: a radial offset; or the air conditioning state adjustment type includes: switching to a sweeping mode; the adjustment parameter value includes: a sweeping step and frequency; and the target animation effect rendering parameter includes: a radial offset. Different air conditioning state adjustment parameters have corresponding target animation effect rendering parameters, which can quickly determine the rendering effect that meets the requirements when rendering is needed and ensure that the rendering effect accurately and truly reflects the air conditioning state; and the air conditioning state adjustment parameter is associated with the animation effect rendering parameters, which facilitates the adjustment of the rendering effect to adapt to different application scenarios and requirements.

As an optional implementation, on the basis of the above embodiment, the method further includes:
receiving a front-rear-row transition request, where the front-rear-row transition request includes a transition type;
determining a rendering direction based on the transition type; and
calling the preset three-dimensional graphics rendering interface according to the rendering direction, where the rendering direction is used to instruct the preset three-dimensional graphics rendering interface to acquire corresponding key frame images and render a transition animation based on the key frame images, and instruct the apparatus for displaying to display the transition animation based on a rendering result.

Among them, a preset rendering direction corresponding to a respective transition type may be pre-configured in the apparatus for displaying an animation effect when a cabin air conditioning is running. Exemplarily, when the transition type is switching to a rear row, the rendering direction is forward, and when the transition type is switching to a front row, the rendering direction is reverse. Among them, the key frame images refer to frame images to be rendered in the transition animations.

Specifically, the user clicks the front/rear components on the display screen to initiate the front-rear-row transition request. After receiving the front-rear-row transition request, the rendering direction is determined from the preset rendering direction corresponding to the respective transition type according to the transition type included in the front-rear-row transition request, and a corresponding state is updated to dynamic rendering. The preset three-dimensional graphics rendering interface is called to acquire the corresponding key frame images in an order of the rendering direction, each key frame image of the transition animation is rendered until the last frame image, and the corresponding state is updated to static rendering, and then the last frame image is rendered all the time. At the same time, after completing the rendering for each frame image, the preset three-dimensional graphics rendering interface sends a rendering result to the apparatus for displaying, so that the apparatus for displaying may display the transition animation according to the rendering result.

The method for displaying an animation effect when a cabin air conditioning is running provided by the embodiment of the present application further includes: receiving a front-rear-row transition request, where the front-rear-row transition request comprises a transition type; determining a rendering direction based on the transition type; and calling the preset three-dimensional graphics rendering interface according to the rendering direction, where the rendering direction is used to instruct the preset three-dimensional graphics rendering interface to acquire corresponding key frame images and render a transition animation based on the key frame images, and instruct the apparatus for displaying to display the transition animation based on a rendering result. The rendering direction is be determined based on the transition type, which can adjust the transition effect in real time according to the operation or needs of the user, thus improving the convenience and fun of use; the key frame images are rendered based on the rendering direction, which can reduce the unnecessary calculation, to accelerate the rendering speed; and the transition animation is rendered and displayed, which provides the user with a smoother and more natural visual experience.

As an optional implementation, on the basis of the above embodiment, before calling the preset three-dimensional graphics rendering interface according to the front-rear-row transition request, the method further includes:
sending a front-rear-row transition notification message to the air conditioning application according to the front-rear-row transition request, where the front-rear-row transition notification message is used to instruct the air conditioning application to hide a build-up layer including an interactive component;
the method further includes:
   in response to determine that a last key frame image of the transition animation is displayed; sending a front-rear-row transition end message to the air conditioning application, where the front-rear-row transition end message is used to instruct the air conditioning application to display the build-up layer including the interactive component.

Specifically, after receiving the front-rear-row transition request, the request is logically verified. If the verification passes, the front-rear-row transition notification message is sent to the air conditioning application. After receiving the notification message, the air conditioning application may hide the build-up layer including the interactive component.

It can be understood that the air conditioning application includes multiple build-up layers, which can be hidden or displayed by changing styles and properties of the build-up layers.

Specifically, when the preset three-dimensional graphics rendering interface acquires the last key frame image in the order of the rendering direction, the transition animation is determined to be displayed in the last key frame image, and a front-rear-row transition end message is sent to the air conditioning application. The air conditioning application will display the build-up layer including the interactive component based on the received end message.

In the method for displaying an animation effect when a cabin air conditioning is running provided by the embodiment of the present application, before calling the preset three-dimensional graphics rendering interface according to the front-rear-row transition request, the method further includes: sending a front-rear-row transition notification message to the air conditioning application according to the front-rear-row transition request, where the front-rear-row transition notification message is used to instruct the air conditioning application to hide a build-up layer including an interactive component; the method further includes: in response to determine that a last key frame image of the transition animation is displayed; sending a front-rear-row transition end message to the air conditioning application, where the front-rear-row transition end message is used to instruct the air conditioning application to display the build-up layer including the interactive component. The interactive component is hidden during the front-rear-row transition, which can prevent the user from accidentally touching the interactive component at this time (resulting in transition failure and system malfunction), to ensure the smooth completion of the transition. And the interactive component is displayed in a timely manner after the end of the front-rear-row transition, which makes it easier for the user to perform the interaction and operation, allowing the user to flexibly operate the control interface.

As an optional implementation, on the basis of the above embodiment, before receiving the front-rear-row transition request, the method further includes:
loading the key frame images of the front-rear-row transition animation, and configuring image indexes for the key frame images; and
sending the key frame images and the corresponding image indexes to the preset three-dimensional graphics rendering interface, so that the preset three-dimensional graphics rendering interface acquires the corresponding key frame images according to the image indexes corresponding to the rendering direction.

Among them, the image indexes are numerical value corresponding to each key frame image, such as 0, 1, 2, etc.

It can be understood that when the rendering direction is forward, the image indexes may be 0-10, while when the rendering direction is reverse, the image indexes may be 10-0.

Specifically, during initialization, the apparatus for displaying an animation effect when a cabin air conditioning is running loads pre-configured key frame images of the front-rear-row transition animation, assigns corresponding image indexes to each key frame image, and sends all key frame images and corresponding image indexes thereof to the preset three-dimensional graphics rendering interface. This allows, when rendering the front-rear-row transition animation, the preset three-dimensional graphics rendering interface to determine the corresponding image indexes based on the rendering direction, and to acquire the corresponding key frame images based on the image indexes.

In the method for displaying an animation effect when a cabin air conditioning is running provided by the embodiment of the present application, before receiving the front-rear-row transition request, the method further includes: loading the key frame images of the front-rear-row transition, and configuring image indexes for the key frame images; and sending the key frame images and the corresponding image indexes to the preset three-dimensional graphics rendering interface, so that the preset three-dimensional graphics rendering interface acquires the corresponding key frame images according to the image indexes corresponding to the rendering direction. The key frame images and the corresponding image indexes thereof are acquired before receiving the transition request, which reduces the loading time during rendering, improves rendering speed; and the corresponding key frame images are acquired based on the image indexes, ensuring the accuracy of the front-rear-row transition animation display.

FIG. 3 is a flow chart of a method for displaying an animation effect when a cabin air conditioning is running provided by another embodiment of the present application. As shown in FIG. 3, an executive subject of the embodiment is a preset three-dimensional graphics rendering interface, which is mounted on a vehicle terminal. The method for displaying an animation effect when a cabin air conditioning is running provided by this embodiment includes the following steps.

S301: receiving an animation effect adjustment instruction, where the animation effect adjustment instruction includes an air conditioning state adjustment parameter.

Among them, the animation effect adjustment instruction is an instruction used to instruct the preset three-dimensional graphics rendering interface to adjust the animation effect, including the air conditioning state adjustment parameter.

Specifically, the user triggers an air conditioning state adjustment operation, the apparatus for displaying an animation effect when a cabin air conditioning is running acquires an air conditioning state adjustment request based on the air conditioning state adjustment operation, and sends the animation effect adjustment instruction to the preset three-dimensional graphics rendering interface based on the air conditioning state adjustment request. The preset three-dimensional graphics rendering interface receives the animation effect adjustment instruction through a connection.

Optionally, the animation effect adjustment instruction may include configuration information for establishing a connection between the apparatus for displaying an animation effect when a cabin air conditioning is running and the preset three-dimensional graphics rendering interface; or during the initialization, the apparatus for displaying an animation effect when a cabin air conditioning is running may send configuration information to the preset three-dimensional graphics rendering interface to establish a connection.

S302: determining a target animation effect rendering parameter according to the air conditioning state adjustment parameter.

Specifically, after receiving the animation effect adjustment instruction, the air conditioning state adjustment parameter is extracted from the animation effect adjustment instruction, and the target animation effect rendering parameter is determined based on the air conditioning state adjustment parameter.

Optionally, during the initialization, a configured animation effect rendering parameter corresponding to a respective air conditioning state may be received. After receiving the animation effect adjustment instruction, according to the air conditioning state adjustment parameter, the target animation effect rendering parameter may be determined from the animation effect rendering parameter corresponding to the respective air conditioning state.

Optionally, after receiving the animation effect adjustment instruction, a pre-configuration algorithm and a mapping relationship may be called to calculate the target animation effect rendering parameter based on the air conditioning state adjustment parameter.

S303: rendering a dynamic effect model of an air conditioning air outlet based on the target animation effect rendering parameter to obtain a first rendering result.

Among them, the first rendering result is a rendering result of the dynamic effect model of the air conditioning air outlet using the preset three-dimensional graphics rendering interface.

Specifically, after determining the target animation effect rendering parameter, a pre-configured rendering program or a rendering mapping file may be called, based on the target animation effect rendering parameter, relevant data for rendering the animation effect of the dynamic effect model of the air conditioning air outlet is calculated by the rendering program; the dynamic effect model of the air conditioning air outlet is rendered based on the calculation result to obtain the first rendering result; or based on the target animation effect rendering parameter, a corresponding animation effect of the dynamic effect model of the air conditioning air outlet is determined from the rendering mapping file to acquire the corresponding relevant data, and the dynamic effect model of the air conditioning air outlet is rendered based on the calculation result to obtain the first rendering result.

Among them, the rendering program is a program used to calculate the relevant data for rendering the animation effect of the dynamic effect model of the air conditioning air outlet, such as, a shader program.

Among them, the rendering mapping file is a file of a map relationship between the target animation effect rendering parameter and the animation effect of dynamic effect model of the air conditioning air outlet, including the animation effect of the dynamic effect model of the air conditioning air outlet corresponding to a respective target animation effect rendering parameter.

S304: sending the first rendering result to an apparatus for displaying, so that the apparatus for displaying displays the dynamic effect model of the air conditioning air outlet based on the first rendering result.

Specifically, after completing the rendering, the first rendering result is sent to the apparatus for displaying. Upon receiving the first rendering result, the apparatus for displaying displays the dynamic effect model of the air conditioning air outlet on the screen according to the first rendering result.

In the method for displaying an animation effect when a cabin air conditioning is running provided by the embodiment of the present application, an animation effect adjustment instruction is received, where the animation effect adjustment instruction includes an air conditioning state adjustment parameter; a target animation effect rendering parameter is determined according to the air conditioning state adjustment parameter; a dynamic effect model of an air conditioning air outlet is rendered based on the target animation effect rendering parameter to obtain a first rendering result; and the first rendering result is sent to an apparatus for displaying, so that the apparatus for displaying displays the dynamic effect model of the air conditioning air outlet based on the first rendering result. Since the animation effect adjustment instruction includes the air conditioning state adjustment parameter, the target animation effect rendering parameter can be determined according to the air conditioning state adjustment parameter, and the animation effect rendering parameters corresponding to different air conditioning states can be accurately obtained; the dynamic effect model of the air conditioning air outlet is rendered based on the target animation effect rendering parameter, so that the rendering result can truly and vividly reflect the air conditioning state, enriching the expression forms of the air conditioning air outlet effect; and finally the rendering result is sent to the apparatus for displaying to display the animation effect of the air conditioning air outlet, so that the user can intuitively see the state change of the air conditioning.

As an optional implementation, on the basis of the above embodiment, before receiving the animation effect adjustment instruction, the method further includes:
acquiring a shader script and a preset animation effect rendering parameter corresponding to a respective air conditioning state;
the determining the target animation effect rendering parameter according to the air conditioning state adjustment parameter includes:
   determining an air conditioning state to be reached through adjustment according to the air conditioning state adjustment parameter; and
   determining, from the preset animation effect rendering parameter corresponding to the respective air conditioning state, a preset animation effect rendering parameter corresponding to the air conditioning state to be reached through adjustment as the target animation effect rendering parameter.

Specifically, initialization begins after the vehicle is powered on, and the apparatus for displaying an animation effect when a cabin air conditioning is running loads the pre-configured shader script and the preset animation effect rendering parameter corresponding to the respective air conditioning state, and establishes a connection with the preset three-dimensional graphics rendering interface through the configuration information. The preset three-dimensional graphics rendering interface acquires the shader script and the preset animation effect rendering parameter corresponding to the respective air conditioning state through the connection.

Among them, the air conditioning state adjustment parameter may include an air conditioning state adjustment type and an adjustment parameter value. For example, the air conditioning state adjustment type is adjustment for an air volume, the adjustment parameter value is set to gear 3, the air conditioning state adjustment type is an air outlet mode, and the adjustment parameter value is a sweeping mode, etc.

Among them, the air conditioning state to be reached through adjustment is a state that the user wants the air conditioning to be achieved, which may be adjusted to an air volume of gear 5, and the wind direction is shifted up by 30°.

Specifically, the air conditioning state to be reached through adjustment is determined by combining the air conditioning state adjustment type and the adjustment parameter value in the air conditioning state adjustment parameter, and then the preset animation effect rendering parameter corresponding to the air conditioning state to be reached through adjustment is found from the preset animation effect rendering parameter corresponding to the respective air conditioning state acquired in advance, and the preset animation effect rendering parameter corresponding to the air conditioning state to be reached through adjustment is determined as the target animation effect rendering parameter.

For example, if the air conditioning state adjustment type is adjustment for the air volume and the adjustment parameter value is gear 3, the air conditioning state to be reached through adjustment is to adjust the air volume to gear 3, and the corresponding preset animation effect rendering parameter is particle motion speed of 30m/s.

In the method for displaying an animation effect when a cabin air conditioning is running provided by the embodiment of the present application, before receiving the animation effect adjustment instruction, the method further includes: acquiring a shader script and a preset animation effect rendering parameter corresponding to a respective air conditioning state; the determining the target animation effect rendering parameter according to the air conditioning state adjustment parameter includes: determining an air conditioning state to be reached through adjustment according to the air conditioning state adjustment parameter; and determining, from the preset animation effect rendering parameter corresponding to the respective air conditioning state, a preset animation effect rendering parameter corresponding to the air conditioning state to be reached through adjustment as the target animation effect rendering parameter. The shader script and the preset animation effect rendering parameter corresponding to the respective air conditioning state are acquired in advance, which can save rendering time and improve the speed and accuracy of animation effect rendering display. The air conditioning state to be reached through adjustment is determined according to the air conditioning state adjustment parameter, which ensures that an intention of the user can be accurately identified; and then the target animation effect rendering parameter is determined from the preset animation effect rendering parameter corresponding to the respective air conditioning state acquired in advance according to the air conditioning state to be reached through adjustment, which can quickly determine the target animation effect rendering parameter when there is a need for rendering, and also ensure the accuracy of the rendering effect.

As an optional implementation, on the basis of the above embodiment, the dynamic effect model of the air conditioning air outlet includes: a three-dimensional frame model and a particle flow animation; information of the air outlet includes a position of the air outlet;
before rendering the dynamic effect model of the air conditioning air outlet based on the target animation effect rendering parameter, the method further includes:
periodically acquiring coordinates of multiple vertices of the three-dimensional frame model, where the coordinates of the multiple vertices of the three-dimensional frame model are generated based on a change of an air conditioning state and a position of the air outlet; and
periodically acquiring a generation time point and coordinates of a respective particle, where the generation time point and the coordinates of the respective particle are generated within a scope of the three-dimensional frame model by a Berlin noise algorithm according to the air conditioning state adjustment parameter and initial coordinates of the multiple vertices of the three-dimensional frame model;
the rendering the dynamic effect model of the air conditioning air outlet based on the target animation effect rendering parameter includes:
   rendering the dynamic effect model of the air conditioning air outlet based on the target animation effect rendering parameter, the generation time point and the coordinates of the respective particle, and the coordinates of the multiple vertices of the three-dimensional frame model.

Among them, the three-dimensional frame model refers to a shape frame of the dynamic effect model of the air conditioning air outlet.

Among them, the particle flow animation refers to an animation generated by the Berlin noise algorithm to simulate a real wind effect.

Specifically, for rendering the dynamic effect model of the air conditioning air outlet, in addition to determining the target animation effect rendering parameter, it is also necessary to acquire, through the connection according to a preset time interval, the coordinates of the multiple vertices of the three-dimensional frame model and the generation time point and the coordinates of the respective particle from the apparatus for displaying an animation effect when a cabin air conditioning is running.

Among them, the preset time interval is a time interval configured in the preset three-dimensional graphics rendering interface, such as, 10ms, 20ms, etc., which is not limited in this embodiment.

Among them, the coordinates of the multiple vertices of the three-dimensional frame model may be the initial coordinates of the multiple vertices of the three-dimensional frame model generated by the apparatus for displaying an animation effect when a cabin air conditioning is running according to the position of the air outlet, or may be coordinates adjusted by the apparatus for displaying an animation effect when a cabin air conditioning is running based on the initial coordinates of the multiple vertices of the three-dimensional frame model and the change of the air conditioning state. For example, the height of the three-dimensional frame model will change with the change of the air volume gear, thus the coordinates of the multiple vertices of the three-dimensional frame model will also change.

It can be understood that the coordinates of the respective particle acquired for the first time are the initial coordinates of the particles generated by the Berlin noise algorithm according to the air conditioning state adjustment parameter and the initial coordinates of the multiple vertices of the three-dimensional frame model. A respective particle will move according to the particle motion speed corresponding to the air conditioning state adjustment parameter, thus the coordinates of the respective particle will change with time.

Specifically, the preset three-dimensional graphics rendering interface calls the shader program to calculate, based on the target animation effect rendering parameter as well as the generation time point and the coordinates of each particle, coordinates to be moved to of the respective particle, and a color of the respective particle is calculated and determined based on the coordinates to be moved to of the respective particle and the coordinates of the multiple vertices of the three-dimensional frame model, and rendering is performed based on the calculation result.

Among them, the shader program is used to render the dynamic effect model of the air conditioning air outlet, and the shader program is created based on the acquired shader script, including a vertex shader program and a segment shader program.

Optionally, rendering the dynamic effect model of the air conditioning air outlet may also include calling the shader program to atomize images including particles and the three-dimensional frame model, to restore the natural air flow and air waves, and solve the problem of uneven distribution or monotonous lack of change in the traditional random particle effect.

In the method for displaying an animation effect when a cabin air conditioning is running provided by the embodiment of the present application, the dynamic effect model of the air conditioning air outlet includes: a three-dimensional frame model and a particle flow animation; information of the air outlet includes a position of the air outlet; before rendering the dynamic effect model of the air conditioning air outlet based on the target animation effect rendering parameter, the method further includes: periodically acquiring coordinates of multiple vertices of the three-dimensional frame model, where the coordinates of the multiple vertices of the three-dimensional frame model are generated based on a change of an air conditioning state and a position of the air outlet; and periodically acquiring a generation time point and coordinates of a respective particle, where the generation time point and the coordinates of the respective particle are generated within a scope of the three-dimensional frame model by a Berlin noise algorithm according to the air conditioning state adjustment parameter, and initial coordinates of the multiple vertices of the three-dimensional frame model; the rendering the dynamic effect model of the air conditioning air outlet based on the target animation effect rendering parameter includes: rendering the dynamic effect model of the air conditioning air outlet based on the target animation effect rendering parameter, the generation time point and the coordinates of the respective particle, and the coordinates of the multiple vertices of the three-dimensional frame model. The coordinates of the multiple vertices of the three-dimensional frame model and the generation time point and the coordinates of the respective particle are periodically acquired, which can timely adjust the animation effect according to the change of the air conditioning state, and the periodic acquisition may also make the rendered particle flow animation more smooth and natural, improving the user experience; and the model is rendered based on a series of parameters, which not only ensures the accuracy of the rendering result, but also makes the rendered animation effect more vivid.

As an optional implementation, on the basis of the above embodiment, the air conditioning state adjustment parameter includes: an air conditioning state adjustment type and an adjustment parameter value;
the air conditioning state adjustment type includes: adjustment for an air volume; the adjustment parameter value includes: an adjusted air volume gear;
the target animation effect rendering parameter includes: a particle motion speed and a height of a three-dimensional frame model;
the rendering the dynamic effect model of the air conditioning air outlet based on the target animation effect rendering parameter, the generation time point and the coordinates of the respective particle, and the coordinates of the multiple vertices of the three-dimensional frame model includes:
   calculating, using the shader script, a color and coordinates of a point that the respective particle moves to, based on the particle motion speed, the generation time point and the coordinates of the respective particle; and rendering a moving particle based on a calculation result to obtain the particle flow animation; and
   rendering the three-dimensional frame model using the height of the three-dimensional frame model and the coordinates of multiple vertices of the three-dimensional frame model;
      or,
   the air conditioning state adjustment type includes: adjustment for a wind direction or switching to a sweeping mode, and the adjustment parameter value includes: an adjusted wind direction angle or a sweeping step and frequency;
   the target animation effect rendering parameter includes: a radial offset;
   the rendering the dynamic effect model of the air conditioning air outlet based on the target animation effect rendering parameter, the generation time point and the coordinates of the respective particle, and the coordinates of the multiple vertices of the three-dimensional frame model includes:
      calculating, using the shader script, a color and coordinates of a point that the respective particle moves to, based on the radial offset, the generation time point and the coordinates of the respective particle, and rendering a moving particle based on a calculation result to obtain the particle flow animation; and
      calculating, using the shader script, coordinates of multiple target vertices of the three-dimensional frame model based on the radial offset and the coordinates of the multiple vertices of the three-dimensional frame model, and rendering the three-dimensional frame model based on a calculation result.

Specifically, the preset three-dimensional graphics rendering interface calls the vertex shader program in the shader program to calculate a motion distance of a respective particle based on the particle motion speed in the target animation effect rendering parameter, the generation time point of the respective particle and a time point acquired the respective particle; and then the coordinates to be moved to of the respective particle are determined according to the coordinates of the respective particle, and the coordinates are sent to the segment shader program. The segment shader program calculates a ratio of the coordinates to be moved to of the respective particle and the coordinates of the multiple vertices of the three-dimensional frame model, so as to determine a corresponding color of the respective particle according to the ratio, and renders the moving particle based on the calculation result to obtain the particle flow animation. Then the preset three-dimensional graphics rendering interface calls the vertex shader program to determine coordinates to be changed of the multiple vertices of the three-dimensional frame model based on the height of the three-dimensional frame model and the coordinates of the multiple vertices of the three-dimensional frame model, and renders the three-dimensional frame model based on the coordinates to be changed of the multiple vertices of the three-dimensional frame model.

It can be understood that the segment shader program is pre-configured with a particle color corresponding to the ratio of the coordinates to be moved to of the respective particle and the coordinates of the multiple vertices of the three-dimensional frame model. It can be understood that both the adjustment for the wind direction and the sweeping mode are adjustments for the wind direction, therefore, the target animation effect rendering parameters are the radial offsets.

Specifically, the preset three-dimensional graphics rendering interface calls the vertex shader program in the shader program to calculate a motion distance of a respective particle based on the particle motion speed in the target animation effect rendering parameter, the generation time point of the respective particle and a time point acquired the respective particle, and then the coordinates to be moved to of the respective particle are determined according to the coordinates of the respective particle and the radial offset, the coordinates are sent to the segment shader program. The segment shader program calculates a ratio of the coordinates to be moved to of the respective particle and the coordinates of the multiple vertices of the three-dimensional frame model, so as to determine a corresponding color of the respective particle according to the ratio, and renders the moving particle based on the calculation result to obtain the particle flow animation. Then the preset three-dimensional graphics rendering interface calls the vertex shader program to determine coordinates to be changed of the multiple vertices of the three-dimensional frame model based on the radial offset and the coordinates of the multiple vertices of the three-dimensional frame model, and renders the three-dimensional frame model based on the coordinates to be changed of the multiple vertices of the three-dimensional frame model.

Among them, when the air conditioning state adjustment type is switching to a sweeping mode, the air conditioning application also starts a periodic synchronization task after sending the air conditioning state adjustment instruction to the ECU based on the air conditioning state adjustment parameter, that is, periodically acquiring a current state of the air conditioning from the ECU and simultaneously send the current state to the preset three-dimensional graphics rendering interface, so that the preset three-dimensional graphics rendering interface can render the dynamic effect model of the air conditioning air outlet based on the current state.

It can be understood that the ECU will adjust the wind direction according to a fixed step and frequency after receiving the air conditioning state adjustment instruction, and then make a reverse adjustment after reaching a boundary.

In the method for displaying an animation effect when a cabin air conditioning is running provided by the embodiment of the present application, the air conditioning state adjustment parameter includes: an air conditioning state adjustment type and an adjustment parameter value; the air conditioning state adjustment type includes: adjustment for an air volume; the adjustment parameter value includes: an adjusted air volume gear; the target animation effect rendering parameter includes: a particle motion speed and a height of a three-dimensional frame model; the rendering the dynamic effect model of the air conditioning air outlet based on the target animation effect rendering parameter, the generation time point and the coordinates of the respective particle, and the coordinates of the multiple vertices of the three-dimensional frame model includes: calculating, using the shader script, a color and coordinates of a point that the respective particle moves to, based on the particle motion speed, the generation time point and the coordinates of the respective particle; and rendering a moving particle based on a calculation result to obtain the particle flow animation; and rendering the three-dimensional frame model using the height of the three-dimensional frame model and the coordinates of multiple vertices of the three-dimensional frame model; or, the air conditioning state adjustment type includes: adjustment for a wind direction or switching to a sweeping mode, and the adjustment parameter value includes: an adjusted wind direction angle or a sweeping step and frequency; the target animation effect rendering parameter includes: a radial offset; the rendering the dynamic effect model of the air conditioning air outlet based on the target animation effect rendering parameter, the generation time point and the coordinates of the respective particle, and the coordinates of the multiple vertices of the three-dimensional frame model includes: calculating, using the shader script, a color and coordinates of a point that the respective particle moves to, based on the radial offset, the generation time point and the coordinates of the respective particle, and rendering a moving particle based on a calculation result to obtain the particle flow animation; and calculating, using the shader script, coordinates of multiple target vertices of the three-dimensional frame model based on the radial offset and the coordinates of the multiple vertices of the three-dimensional frame model, and rendering the three-dimensional frame model based on a calculation result. When adjusting the air volume of the air conditioning, a rendering model of the air conditioning air outlet rendered by the preset three-dimensional graphics rendering interface adjusts the coordinates of the vertices the three-dimensional frame model and the coordinates and colors of the particles with the change of the air volume gear, which ensures the user can more intuitively see the change of the air volume and increases the interest of the air outlet effect of the air conditioning; and the shader script is used to perform calculation and perform rendering based on the calculation result, which ensures the accuracy of the rendering effect. When adjusting the wind direction of the air conditioning and switching to the sweeping mode, the a rendering model of the air conditioning air outlet rendered by the preset three-dimensional graphics rendering interface adjusts the coordinates of the vertices the three-dimensional frame model and the coordinates and colors of the particles with the change of the wind direction, which ensures the user can more intuitively see the change of the air direction and increases the interest of the air outlet effect of the air conditioning; and the shader script is used to perform calculation and perform rendering based on the calculation result, which ensures the accuracy of the rendering effect.

As an optional implementation, on the basis of the above embodiment, the method further includes:
receiving a rendering direction;
acquiring corresponding key frame images based on the rendering direction;
rendering a transition animation based on the key frame images to obtain a second rendering result;
sending the second rendering result to the apparatus for displaying, so that the apparatus for displaying displays the transition animation based on the second rendering result.

Among them, the second rendering result is a result obtained by the preset three-dimensional graphics rendering interface through rendering a front-rear-row transition animation.

Among them, the rendering direction is used to instruct the preset three-dimensional graphics rendering interface to acquire the corresponding key frame images in a corresponding order.

Optionally, each frame image may be numbered and sorted from small to large. When the rendering direction is set to forward, an order for acquiring key frame images is from small to large, and when the rendering direction is reverse, an order for acquiring key frame images is from large to small.

Specifically, after the user initiates the front-rear-row transition request, the rendering direction sent by the apparatus for displaying an animation effect when a cabin air conditioning is running is received, the corresponding key frame images are acquired in the order corresponding to the received rendering direction, the shader program is called to render each of the key frame images to obtain the second rendering result, until the last key frame image, and static rendering is started, that is, rendering the last frame image all the time. At the same time, after completing the rendering for each frame image, a rendering result is sent to the apparatus for displaying, so that the apparatus for displaying may display the transition animation according to the rendering result.

The method for displaying an animation effect when a cabin air conditioning is running provided by the embodiment of the present application further includes: receiving a rendering direction; acquiring corresponding key frame images based on the rendering direction; rendering a transition animation based on the key frame images to obtain a second rendering result; and sending the second rendering result to the apparatus for displaying, so that the apparatus for displaying displays the transition animation based on the second rendering result. The key frame images are rendered according to the rendering direction, which can accurately transfer the background image from a front row to a rear row or from a rear row to a front row. The transition animation is rendered and displayed, which can bring the user a more smooth and natural visual experience, and increase the interest of human-computer interaction

As an optional implementation, on the basis of the above embodiment, before receiving the rendering direction, the method further includes:
receiving the key frame images and corresponding image indexes;
the acquiring the corresponding key frame images based on the rendering direction includes:
   acquiring the corresponding key frame images according to image indexes corresponding to the rendering direction.

Specifically, the key frame image and the corresponding image index sent by the apparatus for displaying an animation effect when a cabin air conditioning is running are received at the initialization stage, so that the order of the image indexes can be determined based on the rendering direction when rendering is required, and the corresponding key frame images can be acquired from the apparatus for displaying an animation effect when a cabin air conditioning is running through the connection according to the order of the image indexes corresponding to the rendering direction.

In the method for displaying an animation effect when a cabin air conditioning is running provided by the embodiment of the present application, before receiving the rendering direction, the method further includes: receiving the key frame images and corresponding image indexes; the acquiring the corresponding key frame images based on the rendering direction includes: acquiring the corresponding key frame images according to image indexes corresponding to the rendering direction. The key frame images and the corresponding image indexes are acquired in advance, which not only ensures the accuracy of the rendering result, but also saves a loading time and improves a rendering speed.

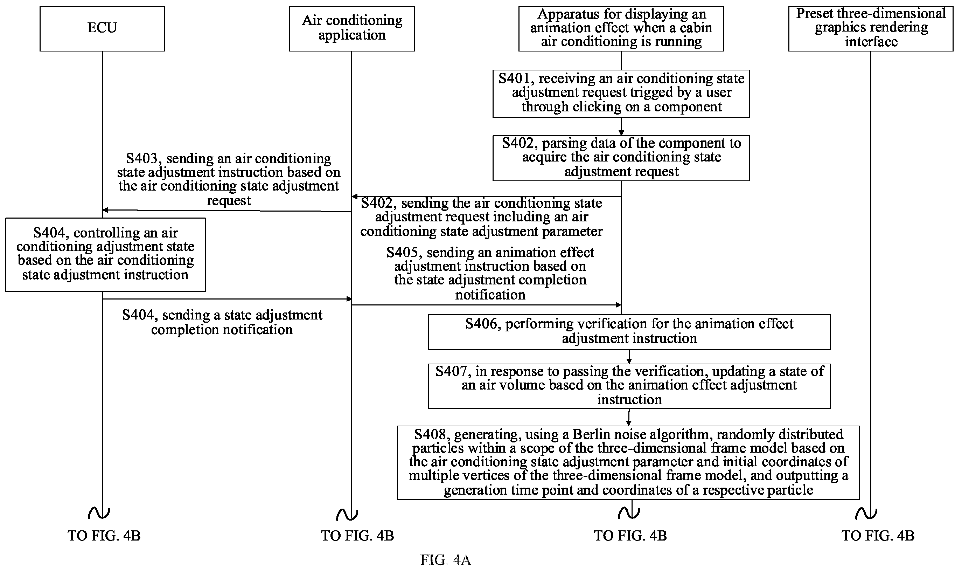

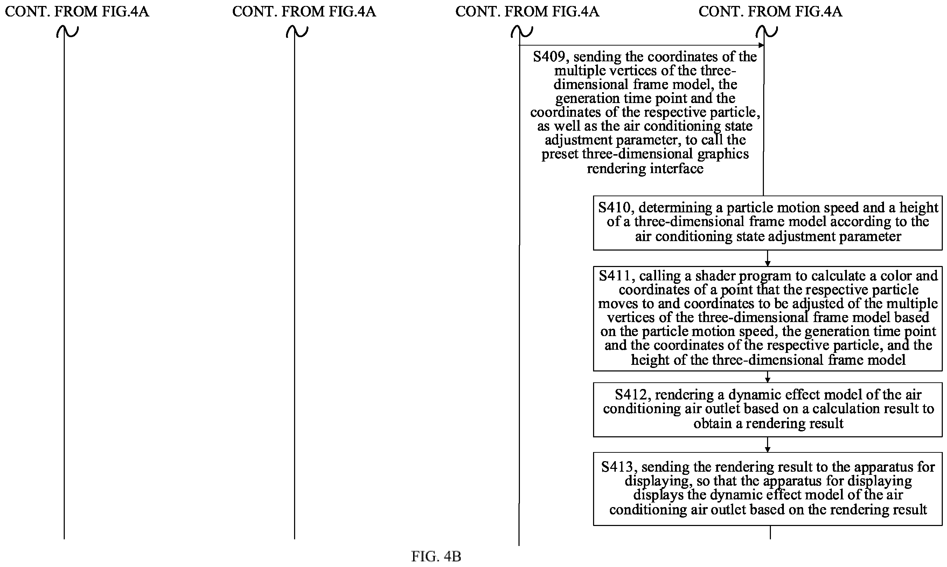

FIG. 4A and FIG. 4B form a signaling interaction flow chart of a method for displaying an animation effect when a cabin air conditioning is running provided by yet another embodiment of the present application. As shown in FIG. 4A and FIG. 4B, the method for displaying an animation effect when a cabin air conditioning is running provided by this embodiment is a method for displaying when a user adjusts an air volume, and the executive subject is a system for displaying an animation effect when a cabin air conditioning is running. The system for displaying an animation effect when a cabin air conditioning is running includes an air conditioning electronic control unit (ECU), an air conditioning application, an apparatus for displaying an animation effect when a cabin air conditioning is running in the air conditioning application, and a preset three-dimensional graphics rendering interface. The method for displaying an animation effect when a cabin air conditioning is running provided by this embodiment includes the following steps.

S401, the apparatus for displaying an animation effect when a cabin air conditioning is running receives an air conditioning state adjustment request trigged by a user through clicking on a component.

S402, the apparatus for displaying an animation effect when a cabin air conditioning is running parses data of the component to acquire the air conditioning state adjustment request, and sends the air conditioning state adjustment request including an air conditioning state adjustment parameter to the air conditioning application.

S403, the air conditioning application sends an air conditioning state adjustment instruction to the ECU based on the air conditioning state adjustment request.

S404, the ECU controls an air conditioning adjustment state based on the air conditioning state adjustment instruction and sends a state adjustment completion notification to the air conditioning application.

S405, the air conditioning application sends an animation effect adjustment instruction to the apparatus for displaying an animation effect when a cabin air conditioning is running based on the received state adjustment completion notification.

S406, the apparatus for displaying an animation effect when a cabin air conditioning is running performs verification for the animation effect adjustment instruction.

S407, in response to passing the verification, the apparatus for displaying an animation effect when a cabin air conditioning is running updates a state of an air volume based on the animation effect adjustment instruction.

S408, the apparatus for displaying an animation effect when a cabin air conditioning is running generates, using a Berlin noise algorithm, randomly distributed particles within a scope of the three-dimensional frame model based on the air conditioning state adjustment parameter and initial coordinates of multiple vertices of the three-dimensional frame model, and outputs a generation time point and coordinates of a respective particle.

S 409, the apparatus for displaying an animation effect when a cabin air conditioning is running sends the coordinates of the multiple vertices of the three-dimensional frame model, the generation time point and the coordinates of the respective particle, as well as the air conditioning state adjustment parameter to the preset three-dimensional graphics rendering interface to call the preset three-dimensional graphics rendering interface.

S410, the preset three-dimensional graphics rendering interface determines a particle motion speed and a height of a three-dimensional frame model according to the air conditioning state adjustment parameter.

S411, the preset three-dimensional graphics rendering interface calls a shader program to calculate a color and coordinates of a point that the respective particle moves to and coordinates to be adjusted of the multiple vertices of the three-dimensional frame model based on the particle motion speed, the generation time point and the coordinates of the respective particle, and the height of the three-dimensional frame model.

S412, the preset three-dimensional graphics rendering interface renders a dynamic effect model of the air conditioning air outlet based on a calculation result to obtain a rendering result.

S413, the preset three-dimensional graphics rendering interface sends the rendering result to the apparatus for displaying, so that the apparatus for displaying displays the dynamic effect model of the air conditioning air outlet based on the rendering result.

It can be understood that in order to truly simulate a wind effect, the particles are in a state of constant motion, thus the S409 to S413 are in a periodic process.

In this embodiment, the implementation and the technical effect of S401 to S413 are similar to those of the corresponding scheme in the above embodiment, which will not be repeated here.

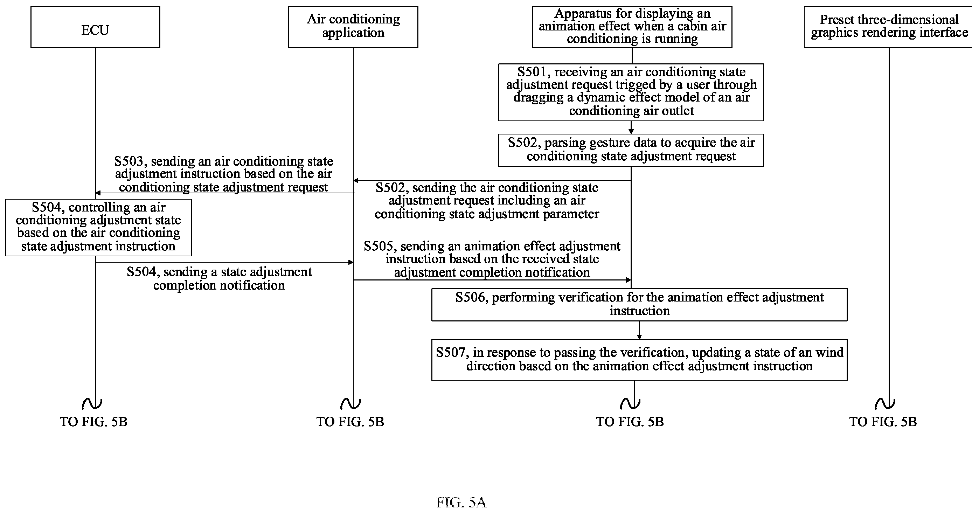

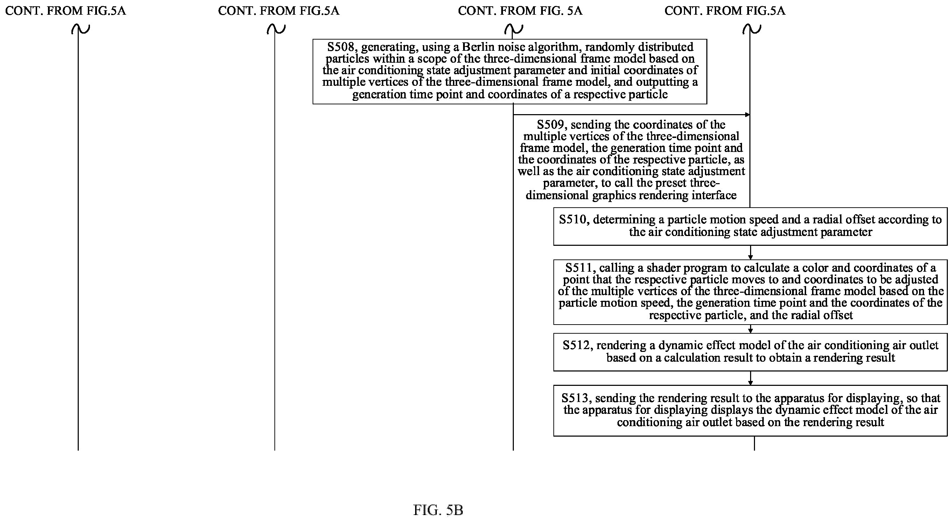

FIG. 5 A and FIG. 5B form a signaling interaction flow chart of a method for displaying an animation effect when a cabin air conditioning is running provided by yet another embodiment of the present application. As shown in FIG. 5 A and FIG. 5B, the method for displaying an animation effect when a cabin air conditioning is running provided by this embodiment is a method for displaying when a user adjusts an wind direction, and the executive subject is a system for displaying an animation effect when a cabin air conditioning is running. The system for displaying an animation effect when a cabin air conditioning is running includes an air conditioning electronic control unit (ECU), an air conditioning application, an apparatus for displaying an animation effect when a cabin air conditioning is running in the air conditioning application, and a preset three-dimensional graphics rendering interface. The method for displaying an animation effect when a cabin air conditioning is running provided by this embodiment includes the following steps.

S501, the apparatus for displaying an animation effect when a cabin air conditioning is running receives an air conditioning state adjustment request trigged by a user through dragging a dynamic effect model of an air conditioning air outlet.

S502, the apparatus for displaying an animation effect when a cabin air conditioning is running parses gesture data to acquire the air conditioning state adjustment request, and sends the air conditioning state adjustment request including an air conditioning state adjustment parameter to the air conditioning application.

S503, the air conditioning application sends an air conditioning state adjustment instruction to the ECU based on the air conditioning state adjustment request.

S504, the ECU controls an air conditioning adjustment state based on the air conditioning state adjustment instruction and sends a state adjustment completion notification to the air conditioning application.

S505, the air conditioning application sends an animation effect adjustment instruction to the apparatus for displaying an animation effect when a cabin air conditioning is running based on the received state adjustment completion notification.

S506, the apparatus for displaying an animation effect when a cabin air conditioning is running performs verification for the animation effect adjustment instruction.

S507, in response to passing the verification, the apparatus for displaying an animation effect when a cabin air conditioning is running updates a state of a wind direction based on the animation effect adjustment instruction

S508, the apparatus for displaying an animation effect when a cabin air conditioning is running generates, using a Berlin noise algorithm, randomly distributed particles within a scope of the three-dimensional frame model based on the air conditioning state adjustment parameter and initial coordinates of multiple vertices of the three-dimensional frame model, and outputs a generation time point and coordinates of a respective particle.

S509, the apparatus for displaying an animation effect when a cabin air conditioning is running sends the coordinates of the multiple vertices of the three-dimensional frame model, the generation time point and the coordinates of the respective particle, as well as the air conditioning state adjustment parameter to the preset three-dimensional graphics rendering interface to call the preset three-dimensional graphics rendering interface.

S510, the preset three-dimensional graphics rendering interface determines a particle motion speed and a radial offset according to the air conditioning state adjustment parameter.

S511, the preset three-dimensional graphics rendering interface calls a shader program to calculate a color and coordinates of a point that the respective particle moves to and coordinates to be adjusted of the multiple vertices of the three-dimensional frame model based on the particle motion speed, the generation time point and the coordinates of the respective particle, and the radial offset.

S512, the preset three-dimensional graphics rendering interface renders a dynamic effect model of the air conditioning air outlet based on a calculation result to obtain a rendering result.

S513, the preset three-dimensional graphics rendering interface sends the rendering result to the apparatus for displaying, so that the apparatus for displaying displays the dynamic effect model of the air conditioning air outlet based on the rendering result.

It can be understood that in order to truly simulate a wind effect, the particles are in a state of constant motion, thus the S509 to S513 are in a periodic process.

In this embodiment, the implementation and the technical effect of S501 to S513 are similar to those of the corresponding scheme in the above embodiment, which will not be repeated here.

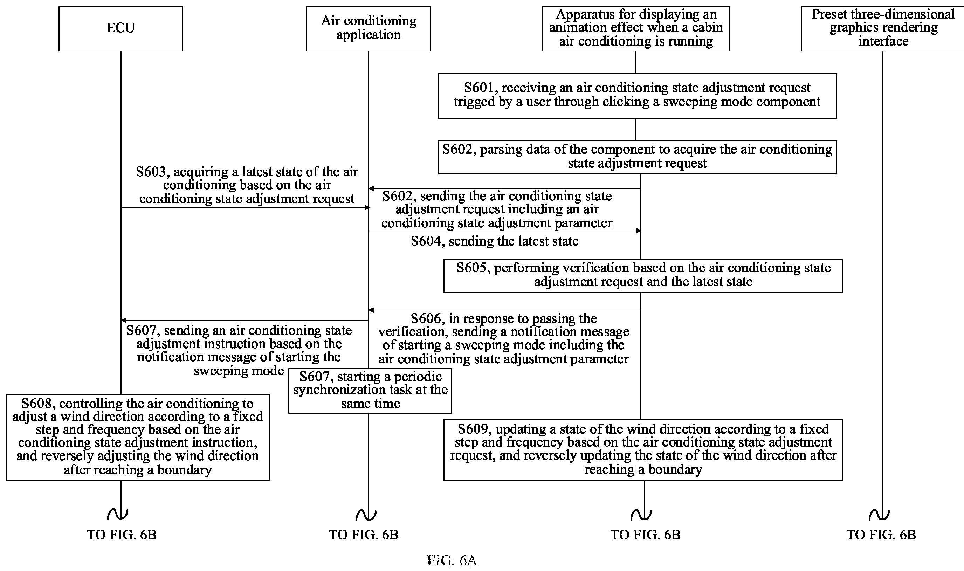

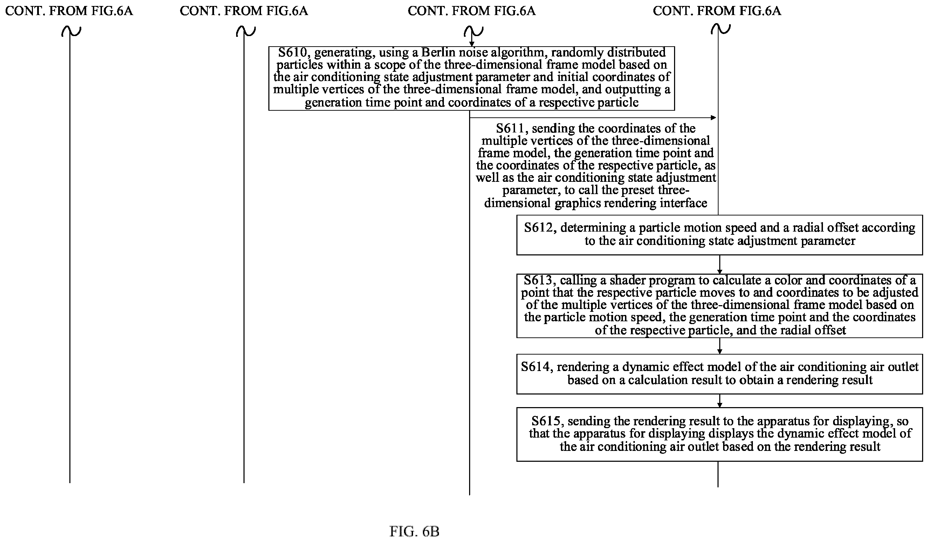

FIG. 6A and FIG. 6B form a signaling interaction flow chart of a method for displaying an animation effect when a cabin air conditioning is running provided by yet another embodiment of the present application. As shown in FIG. 6A and FIG. 6B, the method for displaying an animation effect when a cabin air conditioning is running provided by this embodiment is a method for displaying when a user adjusts the air conditioning to a sweeping mode, and the executive subject is a system for displaying an animation effect when a cabin air conditioning is running. The system for displaying an animation effect when a cabin air conditioning is running includes an air conditioning electronic control unit (ECU), an air conditioning application, an apparatus for displaying an animation effect when a cabin air conditioning is running in the air conditioning application, and a preset three-dimensional graphics rendering interface. The method for displaying an animation effect when a cabin air conditioning is running provided by this embodiment includes the following steps.

S601, the apparatus for displaying an animation effect when a cabin air conditioning is running receives an air conditioning state adjustment request trigged by a user through clicking a sweeping mode component.

S602, the apparatus for displaying an animation effect when a cabin air conditioning is running parses data of the component to acquire the air conditioning state adjustment request, and sends the air conditioning state adjustment request including an air conditioning state adjustment parameter to the air conditioning application.

S603, the air conditioning application acquires a latest state of the air conditioning from the ECU based on the air conditioning state adjustment request.

S604, the air conditioning application sends the latest state to the apparatus for displaying an animation effect when a cabin air conditioning is running.

S605, the apparatus for displaying an animation effect when a cabin air conditioning is running performs verification based on the air conditioning state adjustment request and the latest state.

S606, in response to passing the verification, the apparatus for displaying an animation effect when a cabin air conditioning is running sends a notification message of starting a sweeping mode including the air conditioning state adjustment parameter to the air conditioning application.

S607, the air conditioning application sends an air conditioning state adjustment instruction to the ECU based on the notification message of starting the sweeping mode, and starts a periodic synchronization task at the same time.

S608, the ECU controls the air conditioning to adjust a wind direction according to a fixed step and frequency based on the air conditioning state adjustment instruction, and reversely adjusts the wind direction after reaching a boundary.

S609, the apparatus for displaying an animation effect when a cabin air conditioning is running updates a state of the wind direction according to a fixed step and frequency based on the air conditioning state adjustment request, and reversely updates the state of the wind direction after reaching a boundary.

S610, the apparatus for displaying an animation effect when a cabin air conditioning is running generates, using a Berlin noise algorithm, randomly distributed particles within a scope of the three-dimensional frame model based on the air conditioning state adjustment parameter and initial coordinates of multiple vertices of the three-dimensional frame model, and outputs a generation time point and coordinates of a respective particle.

S611, the apparatus for displaying an animation effect when a cabin air conditioning is running sends the coordinates of the multiple vertices of the three-dimensional frame model, the generation time point and the coordinates of the respective particle, as well as the air conditioning state adjustment parameter to the preset three-dimensional graphics rendering interface to call the preset three-dimensional graphics rendering interface.

S612, the preset three-dimensional graphics rendering interface determines a particle motion speed and a radial offset according to the air conditioning state adjustment parameter.

S613, the preset three-dimensional graphics rendering interface calls a shader program to calculate a color and coordinates of a point that the respective particle moves to and coordinates to be adjusted of the multiple vertices of the three-dimensional frame model based on the particle motion speed, the generation time point and the coordinates of the respective particle, and the radial offset.

S614, the preset three-dimensional graphics rendering interface renders a dynamic effect model of the air conditioning air outlet based on a calculation result to obtain a rendering result.

S615, the preset three-dimensional graphics rendering interface sends the rendering result to the apparatus for displaying, so that the apparatus for displaying displays the dynamic effect model of the air conditioning air outlet based on the rendering result.

It can be understood that after the air conditioning application starts the periodic synchronization task, it will periodically acquire a latest state of the air conditioning from the ECU, and synchronize the latest state to the apparatus for displaying an animation effect when a cabin air conditioning is running, and periodically execute S609 to S615.

It can be understood that an execution sequence of S608 and S609 is not in any order.

In this embodiment, the implementation and the technical effect of S601 to S615 are similar to those of the corresponding scheme in the above embodiment, which will not be repeated here.

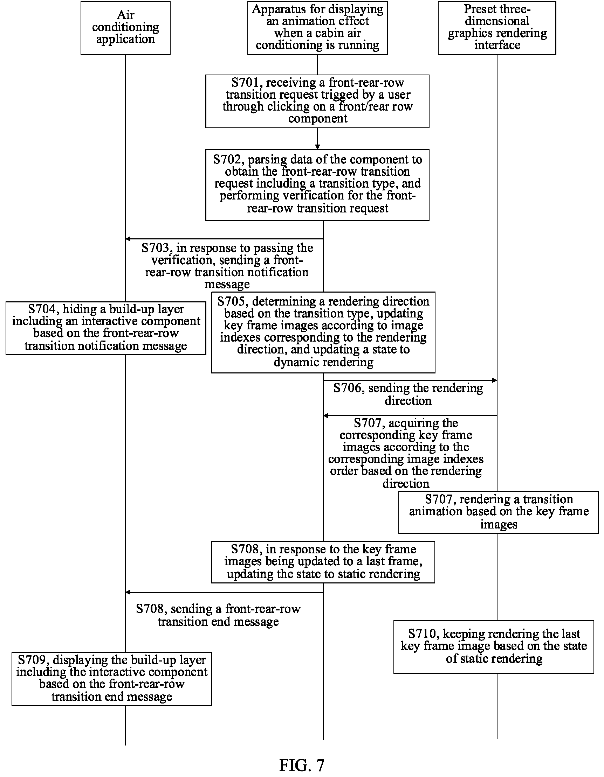

FIG. 7 is a signaling interaction flow chart of a method for displaying an animation effect when a cabin air conditioning is running provided by yet another embodiment of the present application. As shown in FIG. 7, the method for displaying an animation effect when a cabin air conditioning is running provided by this embodiment is a method for displaying when a user performs a front-rear-row transition, and the executive subject is a system for displaying an animation effect when a cabin air conditioning is running. The system for displaying an animation effect when a cabin air conditioning is running includes an air conditioning application, an apparatus for displaying an animation effect when a cabin air conditioning is running in the air conditioning application, and a preset three-dimensional graphics rendering interface. The method for displaying an animation effect when a cabin air conditioning is running provided by this embodiment includes the following steps:

S701, the apparatus for displaying an animation effect when a cabin air conditioning is running receives a front-rear-row transition request trigged by a user through clicking on a front/rear row component.

S702: the apparatus for displaying an animation effect when a cabin air conditioning is running parses data of the component to obtain a front-rear-row transition request including a transition type, and performs verification for the front-rear-row transition request.

S703, in response to passing the verification, the apparatus for displaying an animation effect when a cabin air conditioning is running sends a front-rear-row transition notification message to the air conditioning application.

S704, the air conditioning application hides a build-up layer including an interactive component based on the front-rear-row transition notification message.

S705, the apparatus for displaying an animation effect when a cabin air conditioning is running determines a rendering direction based on the transition type, updates key frame images according to image indexes corresponding to the rendering direction, and updates a state to dynamic rendering.

S706, the apparatus for displaying an animation effect when a cabin air conditioning is running sends the rendering direction to the preset three-dimensional graphics rendering interface.

S707, the preset three-dimensional graphics rendering interface acquires the corresponding key frame images according to the corresponding image indexes order based on the rendering direction, and renders a transition animation based on the key frame images.

S708, in response to the key frame images being updated to a last frame, the apparatus for displaying an animation effect when a cabin air conditioning is running updates the state to static rendering, and sends a front-rear-row transition end message to the air conditioning application.

S709, the air conditioning application displays the build-up layer including the interactive component based on the front-rear-row transition end message.

S710, the preset three-dimensional graphics keeps rendering interface renders the last key frame image based on the state of static rendering.

It can be understood that S704 and S705, as well as S709 and S710 are not in any order.

In this embodiment, the implementation and the technical effect of S701 to S710 are similar to those of the corresponding scheme in the above embodiment, which will not be repeated here.

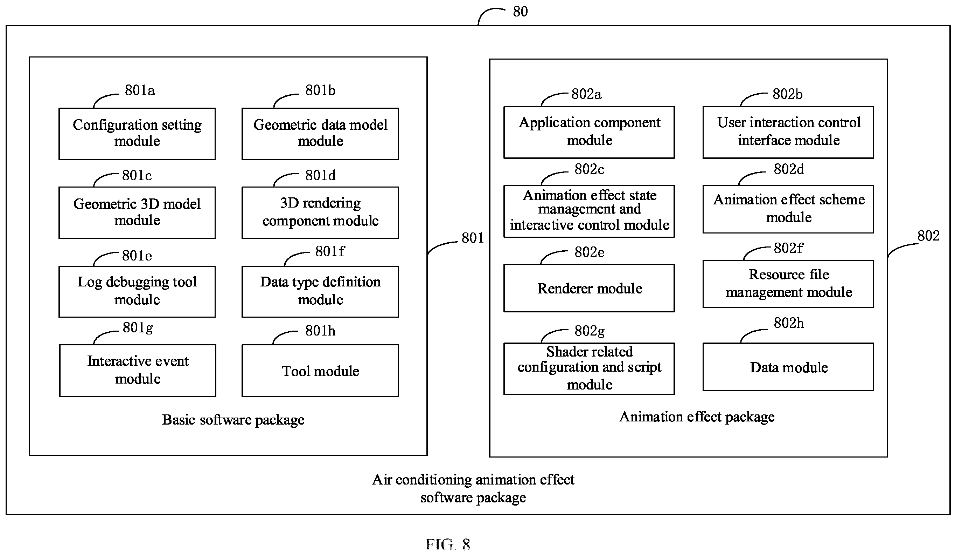

FIG. 8 is a schematic diagram of architecture of an air conditioning animation effect software package provided by the present application, which is a schematic diagram of architecture when an implementation of the apparatus for displaying an animation effect when a cabin air conditioning is running is integrated into an air conditioning application in a form of a software package. As shown in FIG. 8, the air conditioning animation effect software package 80 includes a basic software package 801 and an animation effect package 802. At runtime, the animation effect package 802 loads a configuration resource and calls the basic software package 801 to complete parsing; and the animation effect package 802 creates a rendering surface and an effect controller through a component, completes an effect model loading, and calls a preset three-dimensional graphics rendering interface through the basic software package 801 to complete rendering.

The basic software package 801 provides a basic process control of animation effect rendering and a basic framework of user interaction through a basic renderer, which defines a commonly used 3D model, and opens some parameter configuration to enhance the flexibility and the scalability. The basic software package 801 includes the following modules: a configuration setting module 801a, such as, a resource path, a default background and a debugging mode, etc.; a geometric data model module 801b, such as, a point, a plane, a sphere, etc.; a geometric 3D model module 801c; a 3D rendering component module 801d; a log debugging tool module 801e; a data type definition module 801f; an interactive event module 801g; and a tool module 801h.

The animation effect package 802 expands and enhances the basic software package 801 for the animation effect of the air conditioning air outlet, which provides a 3D application component, a 3D dynamic effect renderer, a gesture, a component and a dynamic effect model of an air conditioning air outlet. The animation effect package 802 is a complete and detailed rendering and interactive control system, and includes the following modules: an application component module 802a, which provides application components for an application to integrate, such as, rendering a surface and detecting a gesture; a user interaction control interface module 802b, which provides an interface for, such as, adjustment for an air volume, adjustment for a wind direction, switching a front and rear rows, etc.; an animation effect state management and interactive control module 802c; an animation effect scheme module 802d, such as, a particle effect, a transformation effect, etc.; a renderer module 802e; a resource file management module 802f, such as, image compression loading optimization, 3D image loading, etc.; a shader related configuration and script module 802g, which includes an algorithm and a mapping relationship for calculating a parameter required for animation effect rendering; and a data module 802h, such as, data loading, conversion, storage, etc.

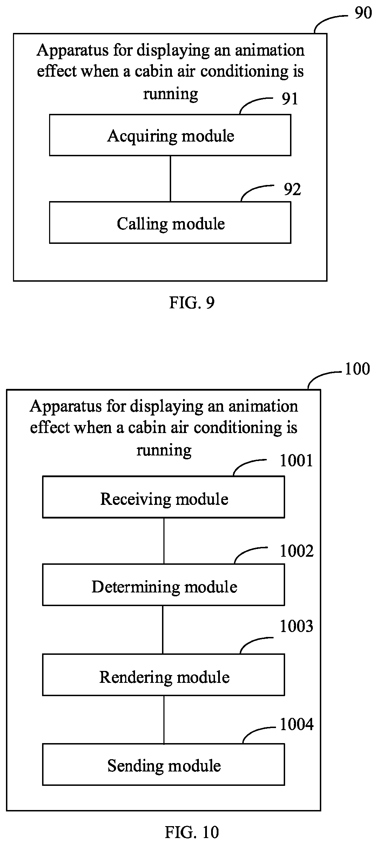

FIG. 9 is a schematic structural diagram of an apparatus for displaying an animation effect when a cabin air conditioning is running provided by the present application. As shown in FIG. 9, the apparatus for displaying an animation effect when a cabin air conditioning is running provided by the embodiment is located in an air conditioner application. The apparatus 90 for displaying an animation effect when a cabin air conditioning is running provided by this embodiment includes an acquiring module 91 and a calling module 92.

Among them, the acquiring module 91 is configured to acquire an air conditioning state adjustment request, where the air conditioning state adjustment request includes an air conditioning state adjustment parameter; and the calling module 92 is configured to call a preset three-dimensional graphics rendering interface according to the air conditioning state adjustment request, where the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result.

The apparatus for displaying an animation effect when a cabin air conditioning is running provided by the embodiment can execute the method provided by the embodiment in FIG. 2. Their specific implementation principles and technical effects are similar, which will not be repeated here.

Optionally, when acquiring the air conditioning state adjustment request, the acquiring module 91 is specifically configured to: receive an air conditioning state adjustment operation triggered by a user through the dynamic effect model of the air conditioning air outlet, and perform intention identification for the air conditioning state adjustment operation to obtain the air conditioning state adjustment request; or receive the air conditioning state adjustment request triggered by the user through a component.

Optionally, when calling the preset three-dimensional graphics rendering interface according to the air conditioning state adjustment request, the calling module 92 is specifically configured to: send, according to the air conditioning state adjustment request, an air conditioning state adjustment instruction to an air conditioning electronic control unit (ECU) through an air conditioning application, where the air conditioning state adjustment instruction is used to instruct the ECU to control an air conditioning adjustment state; receive an animation effect adjustment instruction sent by the air conditioning application; where the animation effect adjustment instruction includes the air conditioning state adjustment parameter; and call the preset three-dimensional graphics rendering interface according to the animation effect adjustment instruction.

Optionally, when calling the preset three-dimensional graphics rendering interface according to the animation effect adjustment instruction, the calling module 92 is specifically configured to: perform verification for the animation effect adjustment instruction according to the air conditioning state adjustment parameter; and in response to passing the verification, call the preset three-dimensional graphics rendering interface.

Optionally, the apparatus for displaying an animation effect when a cabin air conditioning is running provided by the embodiment further includes: a receiving module, an initializing module, a loading module and a sending module.

The receiving module is configured to: receive local configuration information sent by the air conditioning application, where the local configuration information includes information of an air outlet. The initializing module is configured to: perform parameter initialization for the dynamic effect model of the air conditioning air outlet according to the information of the air outlet. The loading module is configured to: load a shader script and a preset animation effect rendering parameter corresponding to a respective air conditioning state. The sending module is configured to: send the loaded shader script and the preset animation effect rendering parameter corresponding to the respective air conditioning state to the preset three-dimensional graphics rendering interface.

Optionally, the dynamic effect model of the air conditioning air outlet includes: a three-dimensional frame model and a particle flow animation; and the information of the air outlet includes a position of the air outlet.

Accordingly, when performing the parameter initialization for the dynamic effect model of the air conditioning air outlet according to the information of the air outlet, the initializing module is specifically configured to: calculate initial coordinates of multiple vertices of the three-dimensional frame model according to the position of the air outlet; where the three-dimensional frame model is a conical frame, and a central axis of the conical frame coincides with a central axis of the air outlet.

Optionally, the apparatus for displaying an animation effect when a cabin air conditioning is running provided by the embodiment further includes: a generating module and a determining module.

The generating module is configured to: generate randomly distributed particles within a scope of the three-dimensional frame model according to the air conditioning state adjustment parameter, initial coordinates of the multiple vertices and a Berlin noise algorithm. The determining module is configured to: determine a generation time point and coordinates of a respective particle. When calling the preset three-dimensional graphics rendering interface according to the air conditioning state adjustment request, the calling module 92 is specifically configured to: send, to the preset three-dimensional graphics rendering interface, coordinates of the multiple vertices of the three-dimensional frame model, the generation time point and the coordinates of the respective particle, and the air conditioning state adjustment parameter, so that the preset three-dimensional graphics rendering interface determines the target animation effect rendering parameter, and renders the dynamic effect model of the air conditioning air outlet based on the target animation effect rendering parameter and the generation time point.

Optionally, when generating the randomly distributed particles within the scope of the three-dimensional frame model according to the air conditioning state adjustment parameter, the initial coordinates of the multiple vertices and the Berlin noise algorithm, and determining the generation time point and the coordinates of the respective particle, the call module 92 specifically configured to: determine a number of generated particles according to the air conditioning state adjustment parameter; determine a position and a size of the three-dimensional frame model according to the initial coordinates of the multiple vertices; and input the position and the size of the three-dimensional frame model and the number of particles into the Berlin noise algorithm, and periodically generating, using the Berlin noise algorithm, randomly distributed particles at an upper end of the three-dimensional frame model, and output the generation time point and the coordinates of the respective particle.

Optionally, the air conditioning state adjustment parameter includes: an air conditioning state adjustment type and an adjustment parameter value; the air conditioning state adjustment type includes: adjustment for an air volume; the adjustment parameter value includes: an adjusted air volume gear; and the target animation effect rendering parameter includes: a particle motion speed and a height of a three-dimensional frame model; or the air conditioning state adjustment type includes: adjustment for a wind direction; the adjustment parameter value includes: an adjusted wind direction angle; and the target animation effect rendering parameter includes: a radial offset; or the air conditioning state adjustment type includes: switching to a sweeping mode; the adjustment parameter value includes: a sweeping step and frequency; and the target animation effect rendering parameter includes: a radial offset.

Optionally, the receiving module is further configured to: receive a front-rear-row transition request, where the front-rear-row transition request includes a transition type. The determining module is further configured to: determine a rendering direction based on the transition type. The calling module 92 is further configured to: call the preset three-dimensional graphics rendering interface according to the rendering direction, where the rendering direction is used to instruct the preset three-dimensional graphics rendering interface to acquire corresponding key frame images and render a transition animation based on the key frame images, and instruct the apparatus for displaying to display the transition animation based on a rendering result.

Optionally, the sending module is further configured to: send a front-rear-row transition notification message to the air conditioning application according to the front-rear-row transition request, where the front-rear-row transition notification message is used to instruct the air conditioning application to hide a build-up layer including an interactive component.

Optionally, the sending module is further configured to: in response to determine that a last key frame image of the transition animation is displayed; send a front-rear-row transition end message to the air conditioning application, where the front-rear-row transition end message is used to instruct the air conditioning application to display the build-up layer including the interactive component.

Optionally, the apparatus for displaying an animation effect when a cabin air conditioning is running provided by the embodiment further includes: a configuring module.

The loading module is further configured to: load the key frame images of the front-rear-row transition animation. The configuring module is configured to: configure image indexes for the key frame images. The sending module is further configured to: send the key frame images and the corresponding image indexes to the preset three-dimensional graphics rendering interface, so that the preset three-dimensional graphics rendering interface acquires the corresponding key frame images according to the image indexes corresponding to the rendering direction.

FIG. 10 is a schematic structural diagram of another apparatus for displaying an animation effect when a cabin air conditioning is running provided by the present application. As shown in FIG. 10, the apparatus for displaying an animation effect when a cabin air conditioning is running provided by the embodiment is located in a preset three-dimensional graphics rendering interface. The apparatus 100 for displaying an animation effect when a cabin air conditioning is running provided by this embodiment includes a receiving module 1001, a determining module 1002, a rendering module 1003, and a sending module 1004.

Among them, the receiving module 1001 is configured to: receive an animation effect adjustment instruction, where the animation effect adjustment instruction an air conditioning state adjustment parameter; the determining module 1002 is configured to: determine a target animation effect rendering parameter according to the air conditioning state adjustment parameter; the rendering module 1003 is configured to: render a dynamic effect model of an air conditioning air outlet based on the target animation effect rendering parameter to obtain a first rendering result; and the sending module 1004 is configured to: send the first rendering result to an apparatus for displaying, so that the apparatus for displaying displays the dynamic effect model of the air conditioning air outlet based on the first rendering result.

The apparatus for displaying an animation effect when a cabin air conditioning is running provided by the embodiment can execute the method provided by the embodiment in FIG. 3. Their specific implementation principles and technical effects are similar, which will not be repeated here.

Optionally, the apparatus for displaying an animation effect when a cabin air conditioning is running provided by the embodiment further includes an acquiring module.

The acquiring module is configured to: acquire a shader script and a preset animation effect rendering parameter corresponding to a respective air conditioning state.

Optionally, when determining the target animation effect rendering parameter according to the air conditioning state adjustment parameter, the determining module 1002 is specifically configured to: determine an air conditioning state to be reached through adjustment according to the air conditioning state adjustment parameter; and determine, from the preset animation effect rendering parameter corresponding to the respective air conditioning state, a preset animation effect rendering parameter corresponding to the air conditioning state to be reached through adjustment as the target animation effect rendering parameter.

Optionally, the dynamic effect model of the air conditioning air outlet includes: a three-dimensional frame model and a particle flow animation; and information of the air outlet includes a position of the air outlet.

Accordingly, the acquiring module is further configured to: periodically acquire coordinates of multiple vertices of the three-dimensional frame model, where the coordinates of the multiple vertices of the three-dimensional frame model are generated based on a change of an air conditioning state and a position of the air outlet; and periodically acquire a generation time point and coordinates of a respective particle, where the generation time point and the coordinates of the respective particle are generated within a scope of the three-dimensional frame model by a Berlin noise algorithm according to the air conditioning state adjustment parameter and initial coordinates of the multiple vertices of the three-dimensional frame model. When rendering the dynamic effect model of the air conditioning air outlet based on the target animation effect rendering parameter, the rendering module 1003 is specifically configured to: render the dynamic effect model of the air conditioning air outlet based on the target animation effect rendering parameter, the generation time point and the coordinates of the respective particle, and the coordinates of the multiple vertices of the three-dimensional frame model.

Optionally, the air conditioning state adjustment parameter includes: an air conditioning state adjustment type and an adjustment parameter value; the air conditioning state adjustment type includes: adjustment for an air volume; the adjustment parameter value includes: an adjusted air volume gear; and the target animation effect rendering parameter includes: a particle motion speed and a height of a three-dimensional frame model.

Accordingly, when rendering the dynamic effect model of the air conditioning air outlet based on the target animation effect rendering parameter, the generation time point and the coordinates of the respective particle, and the coordinates of the multiple vertices of the three-dimensional frame model, the rendering module 1003 is specifically configured to: calculate, using the shader script, a color and coordinates of a point that the respective particle moves to, based on the particle motion speed, the generation time point and the coordinates of the respective particle; and render a moving particle based on a calculation result to obtain the particle flow animation; and render the three-dimensional frame model using the height of the three-dimensional frame model and the coordinates of multiple vertices of the three-dimensional frame model.

Optionally, the air conditioning state adjustment parameter includes: an air conditioning state adjustment type and an adjustment parameter value; the air conditioning state adjustment type includes: adjustment for a wind direction or switching to a sweeping mode, and the adjustment parameter value includes: an adjusted wind direction angle or a sweeping step and frequency; and the target animation effect rendering parameter includes: a radial offset.

Accordingly, when rendering the dynamic effect model of the air conditioning air outlet based on the target animation effect rendering parameter, the generation time point and the coordinates of the respective particle, and the coordinates of the multiple vertices of the three-dimensional frame model, the rendering module 1003 is specifically configured to: calculate, using the shader script, a color and coordinates of a point that the respective particle moves to, based on the radial offset, the generation time point and the coordinates of the respective particle, and render a moving particle based on a calculation result to obtain the particle flow animation; and calculate, using the shader script, coordinates of multiple target vertices of the three-dimensional frame model based on the radial offset and the coordinates of the multiple vertices of the three-dimensional frame model, and render the three-dimensional frame model based on a calculation result.

Optionally, the receiving module 1001 is further configured to: receive a rendering direction. The acquiring module is further configured to: acquire corresponding key frame images based on the rendering direction. The rendering module 1003 is further configured to: render a transition animation based on the key frame images to obtain a second rendering result. The sending module 1004 is further configured to: send the second rendering result to the apparatus for displaying, so that the apparatus for displaying displays the transition animation based on the second rendering result.

Optionally, the receiving module 1001 is further configured to: receive the key frame images and corresponding image indexes. The acquiring module is further configured to: acquire the corresponding key frame images according to image indexes corresponding to the rendering direction.

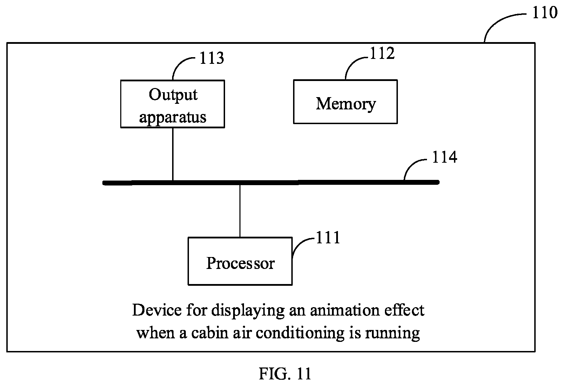

FIG. 11 shows a schematic structural diagram of a device for displaying an animation effect when a cabin air conditioning is running provided by an embodiment of the present application. As shown in FIG. 11, the device 110 for displaying an animation effect when a cabin air conditioning is running is configured to implement the method for displaying an animation effect when a cabin air conditioning is running in any of the above method embodiments. The device 110 for displaying an animation effect when a cabin air conditioning is running may include a processor 111, a memory 112 and an output apparatus 113. The processor 111, the memory 112 and the output device 113 are connected through a bus 114.

The memory 112 is configured to store computer execution instructions. The output apparatus 113 is configured to output a rendering result under control of the processor 111.

The processor 111 is configured to execute a computer program stored in the memory 112 to implement the method for displaying an animation effect when a cabin air conditioning is running in the above embodiment. Please refer to the relevant description in the above method embodiment for details.

In the above embodiment, it should be understood that the processor may be a central processing unit (English: Central Processing Unit, short for: CPU), or may be another general-purpose processor, a digital signal processor (English: Digital Signal Processor, short for: DSP), an application specific integrated circuit (English: Application Specific Integrated Circuit, short for: ASIC), etc. The general-purpose processor may be a microprocessor, or the processor may also be any conventional processor. The steps of the method disclosed in combination with the present invention may be directly executed by the hardware processor, or by a combination of a software module and a hardware module in the processor.

The memory may include a high-speed memory (Random Access Memory, RAM), and may also include a non-volatile memory (Non-volatile Memory, NVM), such as, at least one disk memory.

The bus may be an industry standard architecture (Industry Standard Architecture, ISA) bus, a peripheral component interconnect (Peripheral Component Interconnect, PCI) bus or an extended industry standard architecture (Extended Industry Standard Architecture, EISA) bus, etc. The bus may be divided into an address bus, a data bus, a control bus, etc. For ease of representation, the bus in the drawings of the present application is not limited to only one bus or one type of buses.

The present application further provides a computer program product, including a computer program, where the computer program implements the above method when executed by a processor.

The present application further provides a computer-readable storage medium storing computer execution instructions, where the computer execution instructions implement the above method when executed by a processor.

The above readable storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The readable storage medium may be any available medium that can be accessed by a general-purpose or special-purpose computer.

An exemplary readable storage medium is coupled to a processor, so that the processor may read information from and write information to the readable storage medium. Of course, the readable storage medium may also be a part of the processor. The processor and the readable storage medium may be located in application specific integrated circuits (Application Specific Integrated Circuits, for short: ASIC). Of course, the processor and the readable storage medium may also exist in the device as discrete components.

The division of units is only a kind of logical function division. There may be other division manners in actual implementation, for example, multiple units or components may be combined or integrated into another system, or some features may be ignored or not implemented. On the other hand, the mutual coupling or direct coupling or communication connection shown or discussed may be indirect coupling or communication connection through some interfaces, devices or units, with electrical, mechanical or other forms.

The unit described as a separate part may be or may not be physically separated, and a part displayed as a unit may be or may not be a physical unit, that is, it may be located in one place or distributed in multiple network units. Some or all of the units may be selected according to actual needs to achieve the purpose of solution of the embodiment.

In addition, each functional unit in each embodiment of the present invention may be integrated in a processing unit, or each unit may exist separately, or two or more units may be integrated in one unit.

If a function is realized in a form of a software function unit and sold or used as an independent product, it may be stored in a computer-readable storage medium. Based on this understanding, the technical solution of the present invention essentially contributing to the prior art or part of the technical solution may be embodied in the form of a software product, which is stored in a storage medium and includes several instructions to enable a computer device (which may be a personal computer, a server, or a network device, etc.) to perform all or part of the steps of the methods of the various embodiments of the present invention. The aforementioned storage medium includes various media that can store program codes, such as, a USB flash disk, a removable hard disk, a read-only memory (ROM, Read-Only Memory), a random access memory (RAM, Random Access Memory), a magnetic disc or an optical disc.

Those of ordinary skill in the art may understand that all or part of the steps to implement the above method embodiments may be completed by a hardware related to program instructions. The aforementioned program may be stored in a computer-readable storage medium. When the program is executed, the steps included in the above method embodiments are executed. The aforementioned storage medium includes various media that can store program codes, such as, a ROM, a RAM, a magnetic disc or an optical disc.

Finally, it should be noted that the person skilled in the art will easily come up with other implementation solutions of the present invention after considering the description and practicing the present invention disclosed herein. The present invention is intended to cover any variation, use or adaptation of the present invention, which follows the general principles of the present invention and includes the common general knowledge or frequently used technical means in the technical field not disclosed by the present invention, and is not limited to the precise structure described above and shown in the drawings, and may be modified and changed without departing from the scope thereof. The scope of the present invention is limited only by the appended claims.

## Claims

1. A method for displaying an animation effect when a cabin air conditioning is running, wherein the method is applied to a vehicle terminal, the vehicle terminal is equipped with a preset three-dimensional graphics rendering interface, the preset three-dimensional graphics rendering interface is used to render an animation presented by the vehicle terminal, and the method comprises:
acquiring (S201) an air conditioning state adjustment request, wherein the air conditioning state adjustment request comprises an air conditioning state adjustment parameter;
calling (S202) the preset three-dimensional graphics rendering interface according to the air conditioning state adjustment request, wherein the air conditioning state adjustment request is used to instruct the preset three-dimensional graphics rendering interface to determine a target animation effect rendering parameter based on the air conditioning state adjustment parameter, and the target animation effect rendering parameter is used to instruct the preset three-dimensional graphics rendering interface to render a dynamic effect model of an air conditioning air outlet and instruct an apparatus for displaying to display the dynamic effect model of the air conditioning air outlet based on a rendering result of the dynamic effect model of the air conditioning air outlet.

2. The method according to claim 1, wherein the acquiring (S201) the air conditioning state adjustment request comprises:
receiving an air conditioning state adjustment operation triggered by a user through the dynamic effect model of the air conditioning air outlet, and performing intention identification for the air conditioning state adjustment operation to obtain the air conditioning state adjustment request; or
receiving the air conditioning state adjustment request triggered by the user through a component.

3. The method according to claim 1, wherein the calling (S202) the preset three-dimensional graphics rendering interface according to the air conditioning state adjustment request comprises:
sending, according to the air conditioning state adjustment request, an air conditioning state adjustment instruction to an air conditioning electronic control unit, ECU, through an air conditioning application, wherein the air conditioning state adjustment instruction is used to instruct the ECU to control an air conditioning adjustment state;
receiving an animation effect adjustment instruction sent by the air conditioning application; wherein the animation effect adjustment instruction comprises the air conditioning state adjustment parameter;
calling the preset three-dimensional graphics rendering interface according to the animation effect adjustment instruction;
the calling the preset three-dimensional graphics rendering interface according to the animation effect adjustment instruction comprises:
performing verification for the animation effect adjustment instruction according to the air conditioning state adjustment parameter;
in response to passing the verification, calling the preset three-dimensional graphics rendering interface.

4. The method according to claim 1, before acquiring (S201) the air conditioning state adjustment request, further comprising:
receiving local configuration information sent by an air conditioning application, wherein the local configuration information comprises information of an air outlet;
performing parameter initialization for the dynamic effect model of the air conditioning air outlet according to the information of the air outlet;
loading a shader script and a preset animation effect rendering parameter corresponding to a respective air conditioning state, and sending the loaded shader script and the preset animation effect rendering parameter corresponding to the respective air conditioning state to the preset three-dimensional graphics rendering interface;
wherein the dynamic effect model of the air conditioning air outlet comprises: a three-dimensional frame model and a particle flow animation; and the information of the air outlet comprises a position of the air outlet;
the performing the parameter initialization for the dynamic effect model of the air conditioning air outlet according to the information of the air outlet comprises:
calculating initial coordinates of multiple vertices of the three-dimensional frame model according to the position of the air outlet; wherein the three-dimensional frame model is a conical frame, and a central axis of the conical frame coincides with a central axis of the air outlet.

5. The method according to claim 4, before calling (S202) the preset three-dimensional graphics rendering interface according to the air conditioning state adjustment request, further comprising:
generating randomly distributed particles within a scope of the three-dimensional frame model according to the air conditioning state adjustment parameter, initial coordinates of the multiple vertices and a Berlin noise algorithm, and determining a generation time point and coordinates of a respective particle;
the calling (S202) the preset three-dimensional graphics rendering interface according to the air conditioning state adjustment request comprises:
sending, to the preset three-dimensional graphics rendering interface, coordinates of the multiple vertices of the three-dimensional frame model, the generation time point and the coordinates of the respective particle, and the air conditioning state adjustment parameter, so that the preset three-dimensional graphics rendering interface determines the target animation effect rendering parameter, and renders the dynamic effect model of the air conditioning air outlet based on the target animation effect rendering parameter and the generation time point;
the generating the randomly distributed particles within the scope of the three-dimensional frame model according to the air conditioning state adjustment parameter, the initial coordinates of the multiple vertices and the Berlin noise algorithm, and determining the generation time point and the coordinates of the respective particle comprises:
determining a number of generated particles according to the air conditioning state adjustment parameter;
determining a position and a size of the three-dimensional frame model according to the initial coordinates of the multiple vertices;
inputting the position and the size of the three-dimensional frame model and the number of particles into the Berlin noise algorithm, and periodically generating, using the Berlin noise algorithm, randomly distributed particles at an upper end of the three-dimensional frame model, and outputting the generation time point and the coordinates of the respective particle.

6. The method according to any one of claims 1 to 5, wherein the air conditioning state adjustment parameter comprises: an air conditioning state adjustment type and an adjustment parameter value;
the air conditioning state adjustment type comprises: adjustment for an air volume; the adjustment parameter value comprises: an adjusted air volume gear; and the target animation effect rendering parameter comprises: a particle motion speed and a height of a three-dimensional frame model; or
the air conditioning state adjustment type comprises: adjustment for a wind direction; the adjustment parameter value comprises: an adjusted wind direction angle; and the target animation effect rendering parameter comprises: a radial offset; or
the air conditioning state adjustment type comprises: switching to a sweeping mode; the adjustment parameter value comprises: a sweeping step and frequency; and the target animation effect rendering parameter comprises: a radial offset.

7. The method according to any one of claims 1 to 5, further comprising:
receiving a front-rear-row transition request, wherein the front-rear-row transition request comprises a transition type;
determining a rendering direction based on the transition type;
calling the preset three-dimensional graphics rendering interface according to the rendering direction, wherein the rendering direction is used to instruct the preset three-dimensional graphics rendering interface to acquire corresponding key frame images and render a transition animation based on the key frame images, and instruct the apparatus for displaying to display the transition animation based on a rendering result of the transition animation.

8. The method according to claim 7, wherein before calling the preset three-dimensional graphics rendering interface according to the rendering direction, the method further comprises:
sending a front-rear-row transition notification message to an air conditioning application according to the front-rear-row transition request, wherein the front-rear-row transition notification message is used to instruct the air conditioning application to hide a build-up layer comprising an interactive component;
the method further comprises:
in response to determine that a last key frame image of the transition animation is displayed; sending a front-rear-row transition end message to the air conditioning application, wherein the front-rear-row transition end message is used to instruct the air conditioning application to display the build-up layer comprising the interactive component;
or before receiving the front-rear-row transition request, the method further comprises:
loading the key frame images of the front-rear-row transition animation, and configuring image indexes for the key frame images;
sending the key frame images and the corresponding image indexes to the preset three-dimensional graphics rendering interface, so that the preset three-dimensional graphics rendering interface acquires the corresponding key frame images according to the image indexes corresponding to the rendering direction.

9. A method for displaying an animation effect when a cabin air conditioning is running, wherein the method is applied to a preset three-dimensional graphics rendering interface, the preset three-dimensional graphics rendering interface is mounted on a vehicle terminal, the preset three-dimensional graphics rendering interface is used to render an animation presented by the vehicle terminal, and the method comprises:
receiving (S301) an animation effect adjustment instruction, wherein the animation effect adjustment instruction comprises an air conditioning state adjustment parameter;
determining (S302) a target animation effect rendering parameter according to the air conditioning state adjustment parameter;
rendering (S303) a dynamic effect model of an air conditioning air outlet based on the target animation effect rendering parameter to obtain a first rendering result;
sending (S304) the first rendering result to an apparatus for displaying, so that the apparatus for displaying displays the dynamic effect model of the air conditioning air outlet based on the first rendering result.

10. The method according to claim 9, before receiving (S301) the animation effect adjustment instruction, further comprising:
acquiring a shader script and a preset animation effect rendering parameter corresponding to a respective air conditioning state;
the determining (S302) the target animation effect rendering parameter according to the air conditioning state adjustment parameter comprises:
determining an air conditioning state to be reached through adjustment according to the air conditioning state adjustment parameter;
determining, from the preset animation effect rendering parameter corresponding to the respective air conditioning state, a preset animation effect rendering parameter corresponding to the air conditioning state to be reached through adjustment as the target animation effect rendering parameter.

11. The method according to claim 9, wherein the dynamic effect model of the air conditioning air outlet comprises: a three-dimensional frame model and a particle flow animation; information of the air outlet comprises a position of the air outlet;
before rendering (S303) the dynamic effect model of the air conditioning air outlet based on the target animation effect rendering parameter, the method further comprises:
periodically acquiring coordinates of multiple vertices of the three-dimensional frame model, wherein the coordinates of the multiple vertices of the three-dimensional frame model are generated based on a change of an air conditioning state and a position of the air outlet;
periodically acquiring a generation time point and coordinates of a respective particle, wherein the generation time point and the coordinates of the respective particle are generated within a scope of the three-dimensional frame model by a Berlin noise algorithm according to the air conditioning state adjustment parameter and initial coordinates of the multiple vertices of the three-dimensional frame model;
the rendering (S303) the dynamic effect model of the air conditioning air outlet based on the target animation effect rendering parameter comprises:
rendering the dynamic effect model of the air conditioning air outlet based on the target animation effect rendering parameter, the generation time point and the coordinates of the respective particle, and the coordinates of the multiple vertices of the three-dimensional frame model.

12. The method according to claim 11, wherein the air conditioning state adjustment parameter comprises: an air conditioning state adjustment type and an adjustment parameter value;
the air conditioning state adjustment type comprises: adjustment for an air volume; the adjustment parameter value comprises: an adjusted air volume gear; and the target animation effect rendering parameter comprises: a particle motion speed and a height of a three-dimensional frame model;
the rendering the dynamic effect model of the air conditioning air outlet based on the target animation effect rendering parameter, the generation time point and the coordinates of the respective particle, and the coordinates of the multiple vertices of the three-dimensional frame model comprises:
calculating, using the shader script, a color and coordinates of a point that the respective particle moves to, based on the particle motion speed, the generation time point and the coordinates of the respective particle; and rendering a moving particle based on a calculation result to obtain the particle flow animation;
rendering the three-dimensional frame model using the height of the three-dimensional frame model and the coordinates of multiple vertices of the three-dimensional frame model;
or, the air conditioning state adjustment type comprises: adjustment for a wind direction or switching to a sweeping mode, and the adjustment parameter value comprises: an adjusted wind direction angle or a sweeping step and frequency; and the target animation effect rendering parameter comprises: a radial offset;
the rendering the dynamic effect model of the air conditioning air outlet based on the target animation effect rendering parameter, the generation time point and the coordinates of the respective particle, and the coordinates of the multiple vertices of the three-dimensional frame model comprises:
calculating, using the shader script, a color and coordinates of a point that the respective particle moves to, based on the radial offset, the generation time point and the coordinates of the respective particle, and rendering a moving particle based on a calculation result to obtain the particle flow animation; and calculating, using the shader script, coordinates of multiple target vertices of the three-dimensional frame model based on the radial offset and the coordinates of the multiple vertices of the three-dimensional frame model, and rendering the three-dimensional frame model based on a calculation result.

13. The method according to any one of claims 9 to 12, further comprising:
receiving a rendering direction;
acquiring corresponding key frame images based on the rendering direction;
rendering a transition animation based on the key frame images to obtain a second rendering result;
sending the second rendering result to the apparatus for displaying, so that the apparatus for displaying displays the transition animation based on the second rendering result.

14. The method according to claim 13, before receiving the rendering direction, further comprises:
receiving the key frame images and corresponding image indexes;
the acquiring the corresponding key frame images based on the rendering direction comprises:
acquiring the corresponding key frame images according to image indexes corresponding to the rendering direction.

15. A device (110) for displaying an animation effect when a cabin air conditioning is running, comprising a processor (111), an output apparatus (113) and a memory (112) connected in communication with the processor (111); wherein
the memory (112) stores computer execution instructions;
the output apparatus (113) is configured to output a rendering result under control of the processor (111);
the processor (111) executes the computer execution instructions stored in the memory (112) to execute the method according to any one of claims 1 to 14.
